# EUROPEAN PATENT APPLICATION

(11) **EP 4 507 025 A1**
(43) Date of publication of application: **12.02.2025**
(21) Application number: 24192996.7
(22) Date of filing: 06.08.2024
(51) Int. Cl.: H01M 4/136, H01M 4/58, H01M 4/587, H01M 4/62, H01M 10/052, H01M 10/0562, H01M 4/36

(54) **ALL SOLID SECONDARY BATTERY AND METHOD OF PREPARING THE SAME**

(30) Priority: 08.08.2023 KR 20230103625
(71) Applicant: SAMSUNG SDI CO., LTD., Giheung-gu Yongin-si, Gyeonggi-do 17084 (KR)
(72) Inventor: Son, Inhyuk, 17084 Gyeonggi-do (KR); Lim, Hyungsub, 17084 Gyeonggi-do (KR); Park, Taehyun, 17084 Gyeonggi-do (KR); Jo, Sungnim, 17084 Gyeonggi-do (KR); Shim, Kyueun, 17084 Gyeonggi-do (KR); Lee, Jieun, 17084 Gyeonggi-do (KR); Park, Kyusung, 17084 Gyeonggi-do (KR); Park, Jinhwan, 17084 Gyeonggi-do (KR)
(74) Representative: Michalski Hüttermann & Partner Patentanwälte mbB

(57) **Abstract**

An all solid secondary battery and a method of preparing the same are provided. The all solid secondary battery includes a cathode layer, an anode layer, and a solid electrolyte layer between the cathode layer and the anode layer, wherein the cathode layer includes a cathode current collector and a cathode active material layer on one side or both sides (e.g., opposite sides) of the cathode current collector, wherein the cathode active material layer includes a composite cathode active material, a carbonaceous material, and a solid electrolyte, and the composite cathode active material including a composite including M₂S and molybdenum sulfide (MoeSs) wherein M is alkali metal, the alkali metal is lithium (Li) or sodium (Na), and the anode layer includes an anode current collector and a first anode active material layer on one side of the anode current collector.

## Description

### CROSS-REFERENCES TO RELATED APPLICATION

This application claims priority to and the benefit of Korean Patent Application No. 10-2023-0103625, filed on August 08, 2023, in the Korean Intellectual Property Office, the entire content of which is hereby incorporated by reference.

### BACKGROUND

### 1. Field

One or more embodiments of the present disclosure relate to an all solid secondary battery and a method of preparing the same.

### 2. Description of the Related Art

In recent years, batteries providing increased energy density and safety have been actively developed. Lithium batteries are utilized in information devices, communication devices, automobiles, and/or the like. For example, automobile safety is greatly emphasized as it directly affects human wellbeing.

A lithium battery including a liquid electrolyte includes a flammable organic solvent. A lithium battery including a liquid electrolyte has a higher risk for overheating and creating fire hazards in the event of a short-circuit.

A solid electrolyte has a lower risk for overheating and creating fire hazards in the event of a short-circuit compared to a liquid electrolyte. Such lithium batteries utilizing a solid electrolyte may provide increased safety compared to lithium batteries including a liquid electrolyte.

A secondary battery may utilize a sulfur-based material (*e.g.,* S) as a cathode active material to increase capacity. If (*e.g.,* when) manufacturing secondary batteries containing sulfur-based materials, lithium metal is utilized in the anode because the cathode (*e.g.,* initially) does not contain lithium. In the initial discharge process of a secondary battery, after lithium metal migrates to the cathode containing a sulfur-based material, lithium metal is plated between the anode current collector and the electrolyte layer during the subsequent charging process. During the plating process of lithium, lithium dendrites and/or dead lithium may form (*e.g.,* may easily form) due to irregular plating of lithium. Due to such formation of lithium dendrites and/or dead lithium, reversibility of electrode reactions may deteriorate. A method of suppressing irregular plating of lithium being plated at the anode may be desired and/or required.

In a secondary battery including lithium metal, a short circuit may occur between lithium metal and the cathode due to growth of lithium dendrites and/or elution of molten lithium during charging and discharging processes. There is a desire and/or need for a secondary battery capable of preventing or reducing such lithium dendrites and/or a short circuit between lithium metal and the cathode during the charging and discharging processes of a secondary battery.

In a secondary battery including lithium metal, degradation of the secondary battery may be accelerated as the thickness of the anode increases due to plating and dissolution of a lithium metal layer. A secondary battery capable of suppressing such relatively significant volume changes, for example, thickness changes, of the anode during charging and discharge processes of the secondary battery, is desired and/or required.

The above information disclosed in this Background section is only for enhancement of understanding of the background of the disclosure and therefore it may contain information that does not constitute prior art.

### SUMMARY

Aspects of one or more embodiments relate to an all solid secondary battery having improved high rate capability and/or lifespan characteristics by employing a cathode, which has improved impedance characteristics by including a novel composite cathode active material.

Aspects of one or more embodiments relate to a method of preparing the all solid secondary battery.

Additional aspects will be set forth in part in the description which follows and, in part, will be apparent from the description, or may be learned by practice of the presented embodiments of the present disclosure.

According to one or more embodiments of the present disclosure, an all solid secondary battery includes a cathode layer (or cathode), an anode layer (or anode), and a solid electrolyte layer between the cathode layer and the anode layer, wherein the cathode layer includes a cathode current collector and a cathode active material layer on one side or both sides (*e.g.,* opposite sides) of the cathode current collector, wherein the cathode active material layer includes a composite cathode active material, a carbonaceous material, and a solid electrolyte, and the composite cathode active material includes a composite including M₂S and one or more molybdenum compounds of (*e.g.,* selected from among) molybdenum sulfide (Mo₆S₈) and/or a lithiated molybdenum sulfide, wherein M is alkali metal, the alkali metal is lithium (Li) or sodium (Na), and the anode layer includes an anode current collector and a first anode active material layer on one side of the anode current collector.

According to one or more embodiments of the present disclosure, a method of preparing an all solid secondary battery includes obtaining a composite by milling a composition including M₂S (M being alkali metal, and the alkali metal being lithium (Li) or sodium (Na)) and molybdenum sulfide (Mo₆S₈), preparing a cathode (*e.g.,* a cathode layer) containing a cathode current collector and a cathode active material layer including a composite cathode active material, by utilizing a composition in which the composite is added and mixed with a carbonaceous material and a solid electrolyte, preparing an anode (e.g., an anode layer), and arranging a solid electrolyte layer between the cathode and the anode to prepare the all solid secondary battery.

According to one or more embodiments of the present disclosure, a composite cathode active material includes a composite including M₂S and molybdenum sulfide (Mo₆S₈), wherein M is alkali metal, and the alkali metal is Li or Na.

According to one or more embodiments of the present disclosure, a cathode includes the composite cathode active material.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1 is a cross-sectional view of an all solid secondary battery according to one or more embodiments of the present disclosure;
FIG. 2 is a cross-sectional view of an all solid secondary battery according to one or more embodiments of the present disclosure;
FIG. 3 is a cross-sectional view of an all solid secondary battery according to one or more embodiments of the present disclosure; and
FIGs. 4 and 5 are each a cross-sectional view of an all solid secondary battery according to more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure. Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below, by referring to the drawings, to explain aspects of the present description. The embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that when an element, such as a layer, film, region or substrate, is referred to as being "on," "connected to," or "over" another element, it can be directly on, connected to, or over the other element, or one or more intervening elements may be present. In contrast, if (e.g., when) an element is referred to as being "directly on," "directly connected to," or "directly over" another element, there are no intervening elements present. In addition, it will also be understood that when an element is referred to as being "between" two elements, it can be the only element between the two elements, or one or more intervening elements may also be present.

It will be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section could be termed a second element, component, region, layer, or section, without departing from the spirit and scope of the present disclosure.

The terminology used herein is for the purpose of describing particular embodiments only and is not intended to be limiting of the present disclosure. As used herein, the singular forms "a," "an," and "the" are intended to include the plural forms as well including "at least one," unless the context clearly indicates otherwise. The term "at least one" should not be interpreted as being limited to a singular form.

It will be further understood that the terms "comprises," "comprising," "includes," "including," "contains," and/or "containing," when used in this specification, specify the presence of the stated features, regions, integers, steps, operations, elements, and/or components, but do not preclude the presence or addition of one or more other features, regions, integers, steps, operations, elements, components, and/or groups thereof.

Spatially relative terms, such as "lower," "bottom," or "below, "upper," "top," or "above" may be used herein to conveniently describe one element or feature's relationship to another element or feature. It will be understood that spatially relative terms are intended to encompass different orientations of the device while the device is in use or operated, in addition to the orientation depicted in the drawings. For example, if (e.g., when) the device in one of the drawings is turned over, elements described as being on the "lower" or "bottom" side of other elements would then be oriented on "upper" or "top" sides of the other elements. Therefore, the example term "lower" can therefore, encompasses both an orientation of "lower" and "upper." The device may be placed in other orientations (may be rotated by 90 degrees or in a different direction), and spatially relative terms used herein should be interpreted accordingly.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the present specification and/or the relevant art, and should not be interpreted in an idealized sense or overly formal sense, unless expressly so defined herein.

In the drawings, the relative sizes of elements, layers, and regions may be exaggerated for clarity. Embodiments are described herein with reference to cross-sectional illustrations that are schematic illustrations of idealized embodiments. As such, variations from the illustrated shapes as a result, for example, of manufacturing techniques and/or tolerances, may be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

"Group" refers to a group in the Periodic Table of Elements of the Elements according to the 1-18 Group numbering system by the International Union of Pure and Applied Chemistry ("IUPAC").

The term "particle diameter" or "particle size" as used herein refers to an average particle diameter or particle size if the particle is spherical, and refers to an average major axis length if the particle is non-spherical. The particle diameter may be measured utilizing a particle size analyzer (PSA). The term "particle size" or "particle diameter" refers to an average particle diameter, for example. The term "average particle diameter" as used herein refers to, for example, a median particle diameter (D50).

D50 may refer to the average diameter of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size as measured by a laser diffraction method.

D90 may refer to the average diameter of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size as measured by a laser diffraction method.

D10 may refer to the average diameter of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size as measured by a laser diffraction method.

As used herein, the term "metal" refers to both metals and metalloids such as silicon and germanium, in an elemental or ionic state.

As used herein, the term "alloy" refers to a mixture of two or more metals.

As used herein, the term "electrode active material" refers to an electrode material capable of undergoing lithiation and delithiation.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material, and the terms "delithiation" and "to delithiate" refer to a process of removing lithium from an electrode active material.

As used herein, the terms "charging" and "to charge" refer to a process of providing electrochemical energy to a battery, and the terms "discharging" and "to discharge" refer to a process of removing electrochemical energy from a battery.

As used herein, the terms "positive electrode" and "cathode" refer to an electrode at which electrochemical reduction and lithiation take place during a discharging process, and the terms "negative electrode" and "anode" refer to an electrode at which electrochemical oxidation and delithiation take place during a discharging process.

As used herein, the aspect ratio represents the ratio (L1/L2) of the major axis length L1 (eg, length) and the minor axis length L2 (eg, diameter). Here, the aspect ratio, major axis length, minor axis length, length, and diameter represent the average aspect ratio, average major axis length, average minor axis length, average length, and average diameter. The aspect ratio can be evaluated using a scanning electron microscope.

As used herein, the term "thickness", "length", and "width" refer to average thickness, average length, and average width, respectively. While specific examples and are described herein, there may be alternatives, modifications, variations, improvements, and substantial equivalents of the examples disclosed herein, including those that are presently unforeseen or unappreciated, which may arise from applicants or those skilled in the art. Accordingly, the appended claims as filed and as they can be amended are intended to embrace all such alternatives, modifications, variations, improvements and substantial equivalents.

Hereinbelow, an all solid secondary battery according to embodiments will be described in greater detail.

Hereinbelow, a composite cathode active material according to embodiments, a cathode including the same, and an all solid secondary battery will be described in greater detail.

### [Composite Cathode Active Material]

A composite cathode active material according to one or more embodiments may contain a composite including M₂S and one or more molybdenum compounds of (e.g., selected from among) molybdenum sulfide (Mo₆S₈) and a lithiated molybdenum sulfide, wherein M may be an alkali metal and the alkali metal is Li or Na.

The lithiated molybdenum sulfide may be, for example, LiₓMo₆S₈ (0<x≤4).

The composite cathode active material may include, for example, a composite of lithium sulfide and molybdenum sulfide (Mo₆S₈) (Li₂S-Mo₆S₈ composite), a composite of lithium sulfide and lithiated molybdenum sulfide (Li₂S-LiₓMo₆S₈ (0<x≤4) composite), or a composite of lithium sulfide, molybdenum sulfide (Mo₆S₈), and lithiated molybdenum sulfide.

As lithium sulfide forms a composite with molybdenum sulfide (Mo₆S₈), both (e.g., simultaneously) ionic conductivity and electronic conductivity of the lithium sulfide may improve at the same time.

Molybdenum sulfide (Mo₆S₈) may have chevrel phases, have an extremely stable host structure, and compared to MoS₂, have excellent or suitable ionic conductivity as well as excellent or suitable electronic conductivity.

Due to excellent or suitable ionic conductivity and electronic conductivity of the composite including molybdenum sulfide (Mo₆S₈), the electron and ion conductive networks of lithium sulfide, which has relatively low ionic conductivity and electronic conductivity, may improve, and as a result, the ionic conductivity of the composite cathode active material may improve, and a cathode and an all solid secondary battery, which include the composite cathode active material, may have decreased internal resistance. Further, utilizing the composite containing molybdenum sulfide (Mo₆S₈) may reduce the content (e.g., amount) of the carbonaceous conductive material, and thus may suppress or reduce side reactions with the solid electrolyte and also, may improve volumetric energy density of the all solid secondary battery. Further, a synergistic effect between the intercalation reaction and the conversion reaction of lithium sulfide may decrease the activation energy of lithium sulfide, and thus, initial efficiency and lifetime characteristics of the all solid secondary battery may improve.

Further, as the composite cathode active material includes a carbonaceous material, electronic conductivity may improve, and the internal resistance of a cathode and an all solid secondary battery, which include the composite cathode active material, may decrease.

The composite may include lithium sulfide (Li₂S). Because lithium sulfide has a relatively high theoretical capacity, it may be possible to provide a secondary battery having relatively high energy density. To address the shortcoming of lithium sulfide, namely, relatively low ionic conductivity and/or electronic conductivity, lithium sulfide forms a complex with molybdenum sulfide (Mo₆S₈). In the composite, a content (*e.g.,* amount) of lithium sulfide may be, with respect to 100 parts by weight of the total weight of the composite, 60 parts by weight to 99 parts by weight, 65 parts by weight to 95 parts by weight, or 60 parts by weight to 80 parts by weight. If the content (*e.g.,* amount) of lithium sulfide increases excessively *(*e.g., is excessively or substantially high or higher than the above ranges), it may be difficult to improve ionic conductivity and/or electronic conductivity of lithium sulfide. If the content (*e.g.,* amount) of lithium sulfide is excessively (or substantially) low (*e.g.,* is lower than the above ranges), the energy density of an all solid secondary battery may deteriorate.

In the composite, the size of lithium sulfide (*e.g.,* the average particle diameter of lithium sulfide particles) may be 0.1 nanometers (nm) to 10 micrometers (µm), or 10 nm to 1 µm. Because utilizing the lithium sulfide having a size in the above ranges allows grain boundaries between a plurality of lithium sulfide particles to accommodate volume changes more easily if (*e.g.,* when) charging and discharging the lithium sulfide, volume changes of the composite if (*e.g.,* when) charging and discharging may be mitigated, and/or the likelihood of defect formation, such as cracks, caused by volume changes of the composite if (*e.g.,* when) charging and discharging, may decrease. With the composite cathode active material including the above composite, an all solid secondary battery including the composite cathode active material may have improved cycling performance. For example, an all solid secondary battery including the composite cathode active material may have improved lifespan characteristics. The size of particles of a composite of Li₂S and a lithium salt may be measured utilizing, for example, a laser diffraction method or a scanning electron microscope. For example, the size of a composite of Li₂S and a lithium salt may be an arithmetic mean value of particle diameters of a plurality of particles measured utilizing software from a scanning electron microscope image.

If the size of the lithium sulfide is within the above ranges, the contact surface between the lithium sulfide and molybdenum sulfide (Mo₆S₈) and/or carbonaceous material may further increase, and as a result, the contact surface between the lithium sulfide and molybdenum sulfide (Mo₆S₈) or carbonaceous material may increase, thus further improving the ionic conductivity and/or electronic conductivity of the composite. If a composite cathode active material includes such a composite, reversibility of electrode reactions may improve in the all solid secondary battery including the composite cathode active material. This may result in an increase of the specific capacity of the composite cathode active material.

In the composite, the content (e.g., amount) of a molybdenum compound, such as molybdenum sulfide (Mo₆S₈), may be 1 part by weight to 40 parts by weight, or 5 parts by weight to 30 parts by weight, or 5 parts by weight to 25 parts by weight, or 10 parts by weight to 25 parts by weight.

Because the composite includes a molybdenum sulfide (LiₓMo₆S₈) (0<x≤4) lithiated by intercalation of lithium and lithium sulfide, the ionic conductivity of the composite may increase. LiₓMo₆S₈ may be, for example, Li₁Mo₆S₈, Li₂Mo₆S₈, Li₃Mo₆S₈, Li₄Mo₆S₈, and/or any suitable combination thereof.

The composite cathode active material according to one or more embodiments may contain LiₓMo₆S₈ (0<x≤4), which is a lithiated Mo₆S₈.

For example, because a composite of lithium sulfide and molybdenum sulfide (Mo₆S₈) includes molybdenum sulfide (LiₓMo₆S₈) with intercalated lithium ions, the ionic conductivity of the composite of lithium sulfide and molybdenum sulfide (Mo₆S₈) may improve over the ionic conductivity of lithium sulfide, and consequently, the internal resistance of the composite may decrease.

If a cathode containing the composite is utilized, there is no need to utilize a lithium metal anode as the anode, thus enabling the utilization of an anodeless all solid secondary battery, and as such, an all solid secondary battery with improved energy density may be provided. Further, with the composite cathode active material including the above composite, an all solid secondary battery including the composite cathode active material may have improved cycling performance. For example, an all solid secondary battery including the composite cathode active material may have improved high-rate capability.

The composite cathode active material according to embodiments may further include a carbonaceous material.

The carbonaceous material may include a fibrous carbonaceous material, the fibrous carbonaceous material may include a carbon nanostructure, and the carbon nanostructure may include carbon nanofibers, carbon nanotubes, carbon nanobelts, carbon nanorods, and/or any suitable combination thereof, wherein a content (e.g., amount) of the carbonaceous material may be 1 part by weight to 50 parts by weight, 5 parts by weight to 50 parts by weight, or 10 parts by weight to 30 parts by weight, with respect to 100 parts by weight of a total weight of M₂S and molybdenum sulfide (Mo₆S₈). According to other embodiments, with respect to 100 parts by weight of a total weight of M₂S and molybdenum sulfide (Mo₆S₈), the content (e.g., amount) of the carbonaceous material may be 1 part by weight to 20 parts by weight, 5 parts by weight to 20 parts by weight, or 10 parts by weight to 20 parts by weight. If the content (e.g., amount) of the carbonaceous material is within the above ranges, an all solid secondary battery with improved lifespan characteristics may be manufactured without issues of deteriorated energy density and side reactions occurring.

The composite may further include a solid electrolyte, and the content (e.g., amount) of the solid electrolyte may be 1 part by weight to 50 parts by weight with respect to 100 parts by weight of a total weight of M₂S and molybdenum sulfide (Mo₆S₈).

A Li₂S-molybdenum sulfide (Mo₆S₈) composite may be distinguished from a simple mixture of Li₂S and molybdenum sulfide (Mo₆S₈). The simple mixture of Li₂S, molybdenum sulfide (Mo₆S₈), and carbonaceous material may fail to maintain dense interfaces between Li₂S, the molybdenum sulfide (Mo₆S₈), and the carbonaceous material, and thus may provide high interfacial resistance, and consequently may cause the lifespan characteristics of an all solid secondary battery to deteriorate.

Molybdenum sulfide (Mo₆S₈) according to the composite according to one or more embodiments may have a plate shape (e.g., in a form of plates), a fiber shape (e.g., in a form of fibers), or a formless shape, and utilizing molybdenum sulfide having the aforementioned shapes may improve lifespan characteristics by improving electron and ion conductive networks within electrodes. Further, as the content (e.g., amount) of lithium sulfide within electrodes relatively increases due to a decrease in the content (*e.g.,* amount) of conductive material, initial efficiency may improve, and electrode energy density of the all solid secondary battery may improve.

The specific surface area of the molybdenum sulfide is 1 m²/g to 50 m²/g.

If the molybdenum sulfide has a fiber shape, (*e.g.,* the fibers of) the molybdenum sulfide may have an average diameter of 1 µm to 50 µm and an average thickness of 5 nm to 50 nm, and if (*e.g.,* when) the molybdenum sulfide (Mo₆S₈) has a plate shape, for example, (*e.g.,* the plates of) the molybdenum sulfide may have a length of 1 µm to 50 µm, a thickness of 0.01 µm to 10 µm, and a width of 1 µm to 30 µm. The length represents the size in the X-axis direction, the thickness represents the size in the Z-direction, and the width represents the size in the Y-axis direction.

The plate-shaped structure may have a length, a thickness, and a width in a range of 0.01 µm to 1 µm, respectively, of the plate-shaped molybdenum structure contained in the cathode of the all solid secondary battery finally obtained after milling.

In the composite, the content (*e.g.,* amount) of the molybdenum sulfide (Mo₆S₈) may be 1 wt% to 40 wt%, 5 wt% to 35 wt%, 10 wt% to 35 wt%, 15 wt% to 35 wt%, 20 wt% to 35 wt%, or 25 wt% to 35 wt%, with respect to a total weight of the composite. If the content (*e.g.,* amount) of the molybdenum sulfide (Mo₆S₈) excessively (or substantially) increases (*e.g.,* is excessively high or higher than the above ranges), the energy density of the all solid secondary battery may deteriorate. If the content (*e.g.,* amount) of molybdenum sulfide (Mo₆S₈) is excessively (or substantially) low (*e.g.,* is lower than the above ranges), the ionic conductivity of the composite decreases such that the internal resistance of the composite cathode active material may increase. As a result, the cycling performance of the all solid secondary battery may deteriorate.

In the composite, the molar ratio of lithium sulfide to molybdenum sulfide (Mo₆S₈) may be, for example, 50:50 to 95:5, 60:40 to 95:5, 60:40 to 90:10, 65:35 to 90:10, 65:35 to 85:15, or 70:30 to 85:15. In the composite, the molar ratio of lithium sulfide to molybdenum sulfide (Mo₆S₈) may be, for example, 50:50 to 95:5, 50:50 to 90:10, 50:50 to 85:15, 50:50 to 80:20, 50:50 to 75:25, or 50:50 to 70:30. With the molar ratio of lithium sulfide to molybdenum sulfide (Mo₆S₈) being in the above ranges, the cycling performance of the all solid secondary battery including the composite cathode active material may further improve. If the molar fraction of lithium sulfide is excessively (or substantially) high (*e.g.,* is higher than the above ranges), the aspect of improving ionic conductivity by molybdenum sulfide (Mo₆S₈) may be insignificant. If the molar fraction of lithium sulfide is excessively (or substantially) low (*e.g.,* is lower than the above ranges), the energy density of the all solid secondary battery including the composite cathode active material may deteriorate.

The particle size (*e.g.,* average particle diameter) of the molybdenum sulfide (in a form of particles) may be larger than that of lithium sulfide (in a form of particles), the size (*e.g.,* average particle diameter) of the lithium sulfide may be 0.1 nanometers (nm) to 10 µm, and the size (*e.g.,* average particle diameter) of the composite may be 0.1 µm to 50 µm.

The composite may further include at least one transition metal sulfide, wherein the transition metal sulfide may include one or more transition metal sulfides of (*e.g.,* selected from among) iron, copper, cobalt, nickel, vanadium, niobium, tantalum, chromium, molybdenum, tungsten, zinc, manganese, and/or titanium, wherein the transition metal sulfide may further include Ti₄O₇-MoS₂, V₂O₅-MoS₂, TiS₂, NbS₂, Nb₃S₄, and/or any suitable combination thereof. As such, the composite further containing a transition metal sulfide may further improve the ionic conductivity of the composite cathode active material including the composite. An all solid secondary battery including the composite cathode active material may have reduced internal resistance and improved cycling performance. The composite cathode active material including the composite may have further improved ionic conductivity. An all solid secondary battery including the composite cathode active material may have reduced internal resistance and improved cycling performance.

On the X-ray diffraction spectrum of the composite, first diffraction angles of first peaks shown at diffraction angles 2θ=31±0.5°, 2θ=33±0.5°, and 2θ=46.5±0.5°, corresponding to molybdenum sulfide (Mo₆S₈) may appear to be shifted to a lower angle than second diffraction angles of second peaks shown at diffraction angles 2θ=31±0.5°, 2θ=33±0.5°, and 2θ=46.5±0.5°, of molybdenum sulfide (Mo₆S₈) utilized in the preparation of the composite.

Of the peaks corresponding to molybdenum sulfide (Mo₆S₈), the peak shown at a diffraction angle of 2θ=31±0.5° concerns crystal plane (121), the peak shown at a diffraction angle of 2θ=33±0.5° concerns crystal plane (122), and the peak shown at a diffraction angle of 2θ=46.5±0.5° concerns crystal plane (223).

The diffraction angle at 2θ=31±0.5° may be, for example, 30.7°, and the diffraction angle at 2θ=33±0.5° may be, for example, 33.9°, and the diffraction angle at 2θ=46.5±0.5° may appear at, for example, 46.7°.

The first diffraction angle of the first peaks of the composite may appear to be shifted to a lower angle than second diffraction angles of second peaks of molybdenum sulfide (Mo₆S₈) utilized in the preparation of the composite. During the milling process, as Mo₆S₈ undergoes further lithiation and further converts to Li₁Mo₆S₈, a shift to lower angle may occur to a greater degree.

For example, the position of the first peak may have shifted to a lower angle than the position of the second peak. Further, Mo₆S₈ undergoes lithiation during a milling process, and thus, a change in crystals of Mo₆S₈ material may be observed by XRD. In one or more embodiments, the lithium sulfide-molybdenum sulfide (Mo₆S₈)-carbonaceous material composite may have a reduced crystallite size as compared to the lithium sulfide utilized in the preparation of the composite. Because the lithium sulfide-molybdenum sulfide (Mo₆S₈)-carbonaceous material composite has a reduced crystallite size, volume changes of the crystallite during charging and discharging are reduced, and thus, the composite including a plurality of the crystallite may exhibit reduced volume changes during charging and discharging. Defects such as crack formation during charging and discharging of the composite cathode active material including the composite may be suppressed or reduced. As a result, an all solid secondary battery including the composite cathode active material may have improved cycling performance.

The particle size of the composite cathode active material (in a form of composite particles), for example, the size of composite particles, may be, for example, 10 µm or less, 8 µm or less, 5 µm or less, 2 µm or less, 1.5 µm or less, or 1 µm or less. The particle size of the composite may be, for example, in a range of 1 µm to 10 µm, in a range of 2 µm to 8 µm, or in a range of 3 µm to 8 µm, The size of the composite particles may be, for example, in a range of 0.1 µm to 10 µm, 0.1 µm to 8 µm, 0.1 µm to 5 µm, 0.1 µm to 2 µm, 0.1 µm to 1.5 µm, or 0.1 µm to 1 µm. With the composite particles having a size in the above ranges, volume changes during charging and discharging may be suppressed or reduced, and thus, degradation of a composite cathode active material including the composite during charging and discharging may be suppressed or reduced. If the size of the composite particles excessively (or substantially) increases (*e.g.,* is higher than the above ranges), volume changes of the composite during charging and discharging increase, and thus, degradation of a composite cathode active material including the composite may be accelerated. As a result, a secondary battery including the composite cathode active material of one or more embodiments may have improved cycling performance. A size of M₂S particles included in the composite cathode active material, for example, a size of M₂S particles included in the composite, may be, for example, 2 µm or less, 1.5 µm or less, or 1 µm or less. The size of the M₂S particles may be, for example, in a range of 0.1 µm to 2 µm, 0.1 µm to 1.5 µm, or 0.1 µm to 1 µm. The M₂S particles may have a size in such a range, and thus a change in volume during charging/discharging may be suppressed or reduced, thereby suppressing or reducing the deterioration of the composite cathode active material including the composite during charging/discharging. If the size of the M₂S particles excessively (or substantially) increases (*e.g.,* is higher than the above ranges), a change in volume of the composite during charging/discharging may increase, which may accelerate the deterioration of the composite cathode active material including the composite. Thus, the cycle characteristics of a secondary battery including the composite cathode active material including larger sized M₂S particles may deteriorate.

In one or more embodiments, a secondary battery including the composite cathode active material may have improved cycling performance, for example, improved lifespan characteristics. For example, a size of composite particles, e*.g.,* a particle diameter of the composite may be measured utilizing a laser diffraction method, a scanning electron microscope, and/or the like. For example, the particle diameter of the composite may be an arithmetic mean value of particle diameters of a plurality of particles measured utilizing software from a scanning electron microscope image.

The composite may include a carbonaceous material, and the carbonaceous material may include, for example, a fibrous carbonaceous material. Because the composite includes a fibrous carbonaceous material, the composite may have further improved electronic conductivity. Because the composite includes a fibrous carbonaceous material, electronic conduction from the surface of the composite to the inside thereof may be further facilitated. The internal resistance of the composite cathode active material including the composite may decrease, and the cycling performance of a secondary battery including the composite cathode active material may further improve.

For example, the fibrous carbonaceous material may have an aspect ratio (e.g., a ratio of width to height in an image of the fibrous carbonaceous material) of 2 or more, 3 or more, 4 or more, 5 or more, 10 or more, or 20 or more. For example, the fibrous carbonaceous material may have an aspect ratio of 2 to 30, 3 to 30, 4 to 30, 5 to 30, 10 to 30, or 20 to 30. For example, the fibrous carbonaceous material may have an aspect ratio of 2 to 30, 2 to 20, 2 to 10, 2 to 8, 2 to 5, or 2 to 4. Because the fibrous carbonaceous material has an aspect ratio in the above ranges, an overall electronic conductivity of the composite may improve, and an imbalance of local electronic conductivity within the composite may be further alleviated.

The fibrous carbonaceous material may include, for example, carbon nanostructures. The carbon nanostructures may include, for example, carbon nanofibers (CNF), carbon nanotubes (CNT), carbon nanobelts, carbon nanorods, and/or any suitable combination thereof.

The carbon nanostructures may form (or provide) a primary carbon nanostructure including (*e.g.,* consisting of) one carbon nanostructure, and a secondary carbon nanostructure in which a plurality of primary carbon nanostructures are aggregated (*e.g.,* agglomerated).

The diameter of the primary carbon nanostructure (*e.g.,* the average diameter of a plurality of primary carbon nanostructures) may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure (*e.g.,* the average length of a plurality of a primary carbon nanostructures) may be, for example, 10 nm to 2 µm, 10 nm to 1.5 µm , 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from a scanning electron microscope (SEM) image or a transmission electron microscope (TEM) image. In one or more embodiments, the diameter and/or length of the primary carbon nanostructure may be measured by a laser diffraction method.

The secondary carbon nanostructure may be a structure formed by assembling (e.g., agglomerating) the primary carbon nanostructures to form (or to provide) a bundle type or kind or a rope type or kind, in whole or in part. The secondary carbon nanostructure may be, for example, a bundle-type or kind carbon nanostructure, a rope-type or kind carbon nanostructure, and/or any suitable combination thereof. The diameter of the secondary carbon nanostructure (*e.g.,* the average diameter of secondary carbon nanostructures in the composite) may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanostructure (e.g., the average length of secondary carbon nanostructures in the composite) may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from an SEM image or an optical microscope image. In one or more embodiments, the diameter and/or length of the secondary carbon nanostructure may be measured by a laser diffraction method. For example, a secondary carbon nanostructure may be converted to one or more primary carbon nanostructures by being dispersed in a solvent and/or the like, and then utilized in preparation of the composite.

For example, with respect to 100 parts by weight of the composite, 10 parts by weight to 80 parts by weight of lithium sulfide, 1 part by weight to 40 parts by weight of molybdenum sulfide (Mo₆S₈), and 1 part by weight to 20 parts by weight of carbonaceous material may be included. For example, the content (*e.g.,* amount) of lithium sulfide included in the composite may be 10 parts by weight to 80 parts by weight, 20 parts by weight to 70 parts by weight, 30 parts by weight to 60 parts by weight, or 40 parts by weight to 60 parts by weight, with respect to 100 parts by weight of the composite. The content (*e.g.,* amount) of molybdenum sulfide (Mo₆S₈) included in the composite may be, for example, 10 parts by weight to 40 parts by weight, 15 parts by weight to 40 parts by weight, 20 parts by weight to 40 parts by weight, or 25 parts by weight to 35 parts by weight, with respect to 100 parts by weight of the composite. For example, the content (*e.g.,* amount) of the carbonaceous material included in the composite may be 1 part by weight to 20 parts by weight, 5 parts by weight to 20 parts by weight, or 5 parts by weight to 15 parts by weight, with respect to 100 parts by weight of the composite. With the composite having the above composition of the lithium sulfide, molybdenum sulfide (Mo₆S₈), and the carbonaceous material, a composite cathode active material including the composite may be provided with excellent or suitable ionic conductivity and/or electronic conductivity.

For example, the composite may have an ionic conductivity at 25 °C of 1×10^{- 5} S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more. Ionic conductivity may be measured, for example, utilizing electrochemical impedance spectroscopy, a DC polarization method, and/or the like. With the composite having an ionic conductivity in the above ranges, the composite cathode active material containing the composite may have reduced internal resistance. A secondary battery including the composite cathode active material may have improved cycling performance. For example, the composite may have an electronic conductivity at 25 °C of 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1x10⁻⁴ S/cm or more. Electronic conductivity may be measured, for example, utilizing electrochemical impedance spectroscopy, a DC polarization method, and/or the like. With the composite having an electronic conductivity in the above ranges, the composite cathode active material containing the composite may have reduced internal resistance. A secondary battery including the composite cathode active material may have improved cycling performance.

### Cathode

### Cathode: Cathode Active Material

A cathode according to one or more embodiments may include a cathode current collector and a cathode active material layer arranged on one side or both sides (*e.g.,* opposite sides) of the cathode current collector. The cathode active material layer may contain the composite cathode active material, a carbonaceous material, and a solid electrolyte.

The cathode active material layer may contain the composite cathode active material according to one or more embodiments, a carbonaceous material, and a solid electrolyte.

The content (*e.g.,* amount) of the carbonaceous material may be 1 part by weight to 10 parts by weight, 1 part by weight to 8 parts by weight, or 1 part by weight to 5 parts by weight, for example, may be 1 part by weight to 2 parts by weight based on 100 parts by weight of the cathode active material layer. Because the cathode contains Mo₂S₆ that has high electronic conductivity and ionic conductivity, the content (e.g., amount) of a carbon conductive material, which is a conductive material, may be reduced, and as a result, volumetric energy density may improve. Further, a synergistic effect of the intercalation reaction and Li₂S conversion reaction may lower the activation energy of Li₂S, so that an all solid secondary battery having improved rate characteristics, initial efficiency and lifespan characteristics may be prepared.

The content (*e.g.,* amount) of the solid electrolyte in the cathode active material layer may be 1 part by weight to 15 parts by weight, with respect to 100 parts by weight of a total weight of the cathode active material layer. Further, if (*e.g.,* when) the cathode active material layer contains a binder, the content (*e.g.,* amount) of the binder may be 1 part by weight to 10 parts by weight with respect to 100 parts by weight of the cathode active material layer.

If the cathode only contains the composite cathode active material containing Li₂S and Mo₆S₈, the all solid secondary battery exhibits cell performance at a high temperature of 60 °C or more, whereas if (*e.g.,* when) the cathode includes the composite cathode active material, a solid electrolyte, and a carbonaceous material, a further decreased internal resistance at a temperature of 45 °C or less may be achieved. Thus, the cycling performance of a secondary battery provided with the cathode may further improve.

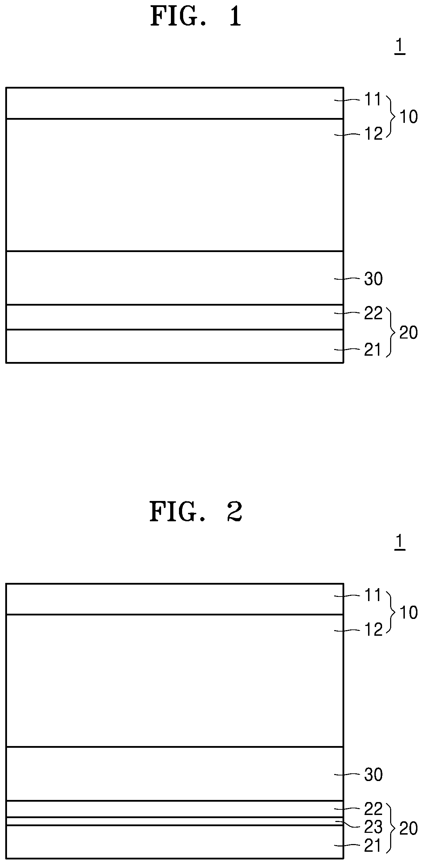

Referring to FIGs. 1 to 5, a cathode layer (or cathode) 10 may include a cathode current collector 11; and a cathode active material layer 12 arranged on one side or both sides (*e.g.,* opposite sides) of the cathode current collector 11. The cathode active material layer 12 may include the composite cathode active material or may include a composite cathode active material and a solid electrolyte.

The cathode active material layer 12 may include 40 parts by weight to 90 parts by weight, 40 parts by weight to 80 parts by weight, 50 parts by weight to 80 parts by weight, or 50 parts by weight to 70 parts by weight of the composite cathode active material, with respect to 100 parts by weight of the cathode active material layer 12. If the content (*e.g.,* amount) of the composite cathode active material excessively (or substantially) decreases (*e.g.,* is lower than the above ranges), the energy density of the secondary battery may deteriorate. If the content (*e.g.,* amount) of the composite cathode active material excessively (or substantially) increases (*e.g.,* is higher than the above ranges), degradation of the cathode by volume changes of the cathode during charging and discharging may be accelerated. As a result, the cycling performance of the secondary battery 1 may deteriorate.

The cathode active material layer 12 may further include other suitable cathode active materials, in addition to the composite cathode active materials above.

The other cathode active materials may include, for example, a Li₂S-containing composite. Examples of the Li₂S composites may include a composite of Li₂S and a carbonaceous material, a composite of Li₂S, a carbonaceous material, and a solid electrolyte, a composite of Li₂S and a solid electrolyte, a composite of Li₂S and a lithium salt, a composite of Li₂S and a metal carbide, a composite of Li₂S, a carbonaceous material, and a metal carbide, a composite of Li₂S and a metal nitride, a composite of Li₂S, a carbonaceous material, and a metal nitride, and/or any suitable combination thereof.

The composite of Li₂S and a carbonaceous material may include a carbonaceous material. For details of the carbonaceous material, refer to the carbonaceous material of the composite cathode active material described above. The method of preparing the composite of Li₂S and a carbonaceous material may be a dry method, a wet method, and/or any suitable combination thereof; however, the method is not limited thereto and may be any suitable method generally available and/or generally utilized in the art. For example, the method of preparing the composite of Li₂S and a carbonaceous material may be milling, heat treatment, deposition, and/or the like; but the method is not necessarily limited thereto and may be any suitable method generally available and/or generally utilized in the art.

The composite of Li₂S, a carbonaceous material, and a solid electrolyte may include a carbonaceous material and a solid electrolyte. For details of the carbonaceous material, refer to the composite of Li₂S and a carbonaceous material, described above. The solid electrolyte may be, for example, any suitable material generally available and/or generally utilized as an ionically (e.g., ion) conductive material in the art. The solid electrolyte may be, for example, an inorganic solid electrolyte. The solid electrolyte may be, for example, a crystalline solid electrolyte, an amorphous solid electrolyte, and/or any suitable combination thereof. Examples of the solid electrolyte may include a sulfide-based solid electrolyte, an oxide-based solid electrolyte, a polymer solid electrolyte, and/or any suitable combination thereof. The sulfide-based solid electrolyte may contain, for example, Li, S, and P, and may optionally further contain a halogen element. The sulfide-based solid electrolyte may be (*e.g.,* may be selected from among) sulfide-based solid electrolytes that are generally utilized in a solid electrolyte layer. The sulfide-based solid electrolyte may have an ionic conductivity of 1×10⁻⁵ S/cm or more at room temperature, for example. The oxide-based solid electrolyte may contain, for example, Li, O, and a transition metal element, and may optionally further contain other elements. For example, the oxide-based solid electrolyte may be a solid electrolyte having an ionic conductivity of 1×10⁻⁵ S/cm or more at room temperature. The oxide-based solid electrolyte may be (*e.g.,* may be selected from among) oxide-based solid electrolytes that are generally utilized in a solid electrolyte layer.

The composite of Li₂S and solid electrolyte may include a solid electrolyte. For details of the solid electrolyte, refer to the composite of Li₂S, carbonaceous material, and solid electrolyte described above.

The composite of Li₂S and lithium salt may include Li₂S and a lithium salt. For details of the lithium salt, refer to the lithium salt of the composite cathode active material described above. In one or more embodiments, the lithium salt may be at least one lithium halide compound of (*e.g.,* selected from among) LiF, LiCl, LiBr, and/or Lil. For example, the composite of Li₂S and a lithium salt may be a composite of Li₂S and a lithium halide. Because the composite of Li₂S and a lithium halide includes a lithium halide compound, further improved ionic conductivity may be provided. The composite of Li₂S and a lithium salt may be distinguished from a simple mixture of Li₂S and a lithium salt. Because the simple mixture of Li₂S and a lithium salt fails to maintain dense interfaces between Li₂S and the lithium salt, the simple mixture of Li₂S and a lithium salt may provide high interfacial resistance and cause deterioration of lifespan characteristics of an all solid secondary battery.

The composite of Li₂S and metal carbide may include a metal carbide. The metal carbide may be, for example, a two-dimensional metal carbide. The two-dimensional metal carbide may be represented by, for example, Mₙ₊₁CₙTₓ (M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, and/or any suitable combination thereof. The surface of the two-dimensional metal carbide may be terminated by O, OH, and/or F.

The composite of Li₂S, carbonaceous material, and metal carbide may include a carbonaceous material and a metal carbide. For details of the carbonaceous material, refer to the composite of Li₂S and a carbonaceous material, described above. For details of the metal carbide, refer to the composite of Li₂S and a metal carbide described above.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (M is a transition metal, T is a terminal group, T is O, OH and/or F, n = 1, 2, or 3, and x is the number of terminal groups). The surface of the two-dimensional metal nitride may be terminated by O, OH, and/or F.

The composite of Li₂S, carbonaceous material, and metal nitride may include a carbonaceous material and a metal nitride. For details of the carbonaceous material, refer to the composite of Li₂S and a carbonaceous material, described above. For details of the metal carbide, refer to the composite of Li₂S and a metal nitride described above.

The cathode active material layer 12 may further include, for example, a sulfide-based compound distinguished from the cathode active materials described above. The sulfide-based compound may be, for example, a compound including sulfur and a metal element other than Li. The sulfide-based compound may be, for example, a compound including sulfur and a metal element with an atomic weight of 10 or more, that belongs to Groups 1 to 14 in the Periodic Table of the Elements. The sulfide-based compound may be, for example, FeS₂, VS₂, NaS, MnS, FeS, NiS, CuS, and/or any suitable combination thereof. As the cathode active material layer further includes a sulfide-based compound, cycling performance of an all solid secondary battery may further improve. The content (e.g., amount) of such a sulfide-based compound included in the cathode active material layer 12 may be 10 wt% or less, 5 wt% or less, 3 wt% or less, or 1 wt% or less, with respect to the total weight of the cathode active material layer 12.

### Cathode: Solid Electrolyte

The cathode active material layer 12 may further include, for example, a solid electrolyte. The solid electrolyte may be a sulfide-based solid electrolyte, for example. The solid electrolyte included in the cathode layer 10 may be identical to or different from a solid electrolyte included in a solid electrolyte layer 30. For details of the solid electrolyte, the description of the solid electrolyte layer 30 may be referred to.

The solid electrolyte included in the cathode active material layer 12 may have a smaller median particle diameter D50 than that of the solid electrolyte included in the solid electrolyte layer 30. For example, the median particle diameter D50 of the solid electrolyte included in the cathode active material layer 12 may be 90% or less, 80% or less, 70% or less, 60% or less, 50% or less, 40% or less, 30% or less, or 20% or less, relative to the median particle diameter D50 of the solid electrolyte included in the solid electrolyte layer 30. D50 average particle diameter may be, for example, a median particle diameter (D50). Median particle diameter (D50) may refer to a particle size corresponding to a cumulative volume of 50 vol% as counted from the smallest particle size in a particle size distribution measured by a laser diffraction method.

With respect to 100 parts by weight of the cathode active material layer 12, the solid electrolyte may be included in a content (*e.g.,* amount) of 10 parts by weight to 60 parts by weight, 10 parts by weight to 50 parts by weight, 20 parts by weight to 50 parts by weight, or 30 parts by weight to 50 parts by weight. The solid electrolyte may be, for example, a sulfide-based solid electrolyte. If the content (*e.g.,* amount) of the solid electrolyte excessively (or substantially) decreases (*e.g.,* is lower than the above ranges), the internal resistance of the cathode increases, causing the cycling performance of the secondary battery to deteriorate. If the content (e*.g.,* amount) of the sulfide-based solid electrolyte excessively (or substantially) increases (*e.g.,* is higher than the above ranges), the energy density of the secondary battery 1 may decrease.

### Cathode: Conductive Material

The cathode active material layer 12 may further include a conductive material. The conductive material may be, for example, a carbonaceous conductive material, a metal-based conductive material, and/or any suitable combination thereof. Examples of the carbonaceous conductive material may include graphite, carbon black, acetylene black, Ketjen black, carbon fibers, and/or any suitable combination thereof. However, the carbonaceous conductive material is not limited to the aforementioned examples and may be any suitable material generally available and/or generally utilized as a carbonaceous conductive material in the art. The metal-based conductive material may be metal powder, metal fibers, and/or any suitable combination thereof, but without being limited thereto may any suitable metal-based conductive material generally available and/or generally utilized in the art. For example, the content (e.g., amount) of the conductive material included in the cathode active material layer 12 may be 1 wt% to 30 wt%, 1 wt% to 20 wt%, 1 wt% to 10 wt%, with respect to the total weight of the cathode active material layer 12.

The cathode active material layer may include a carbonaceous material and the carbonaceous material may be arranged only in the composite cathode active material. The cathode active material layer 12 may not contain any additional carbonaceous materials, other than the composite cathode active material provided with the carbonaceous material. Because the cathode active material layer does not contain any additional carbonaceous materials, the cathode and the secondary battery 1 may have improved energy density, and the manufacturing process thereof may be simplified.

### Cathode: Binder

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any suitable material generally utilized and/or generally available as a binder in the art. The content (e.g., amount) of the binder included in the cathode active material layer 12 may be, for example, 1 wt% to 10 wt% with respect to the total weight of the cathode active material layer 12. In one or more embodiments, the binder may not be provided.

### Cathode: Other Additives

The cathode active material layer 12 may further include, for example, an additive such as a filler, a coating agent, a dispersing agent, and/or an ionically conductive aid, in addition to the cathode active material, the solid electrolyte, the binder, and the conductive material described above.

For the filler, coating agent, dispersing agent, and ion-conducting aid that may be included in the cathode active material layer 12, any suitable material generally utilized and/or generally available in an electrode of an all solid secondary battery may be utilized.

### Cathode: Cathode Current Collector

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof. In one or more embodiments, the cathode current collector 11 may not be provided. The cathode current collector 11 may have a thickness of, for example, 1 µm to 100 µm, 1 µm to 50 µm, 5 µm to 25 µm, or 10 µm to 20 µm.

For example, the cathode current collector 11 may include a base film, and a metal layer arranged on one side or both sides (*e.g.,* opposite sides) of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), and/or any suitable combination thereof. For example, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), and/or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminum foil, a copper foil, an stainless steel (SUS) foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of 1 µm to 50 µm, 1.5 µm to 50 µm, 1.5 µm to 40 µm, or 1 µm to 30 µm. With the base film having a thickness within the above ranges, the weight of the electrode assembly may be more effectively reduced. For example, the base film may have a melting point of 100 °C to 300 °C, 100 °C to 250 °C or less, or 100 °C to 200 °C. Because the base film has a melting point within the above ranges, the base film may easily melt and be bonded to the lead-tab while welding the lead-tab. To improve adhesion between the base film and the metal layer, a surface treatment such as corona treatment may be performed on the base film. For example, the metal layer may have a thickness of 0.01 µm to 3 µm, 0.1 µm to 3 µm, 0.1 µm to 2 µm, or 0.1 µm to 1 µm. With the metal layer having a thickness within the above ranges, the electrode assembly may provide stability while maintaining conductivity. For example, the metal chip may have a thickness of 2 µm to 10 µm, 2 µm to 7 µm, or 4 µm to 6 µm. With the metal chip having a thickness within the above ranges, the metal layer and the lead-tab may be more easily connected. Because the cathode current collector 11 has the above structure, the weight of the cathode may be reduced, and as a result, energy density of the cathode and the lithium battery may improve.

### Cathode: Inactive Member

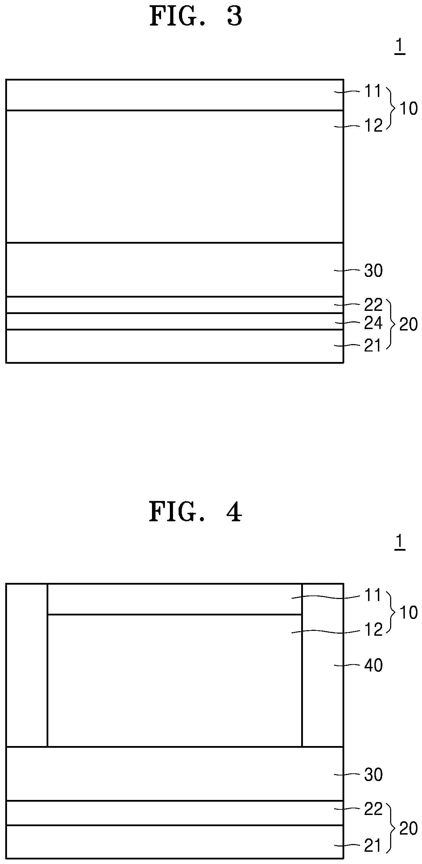

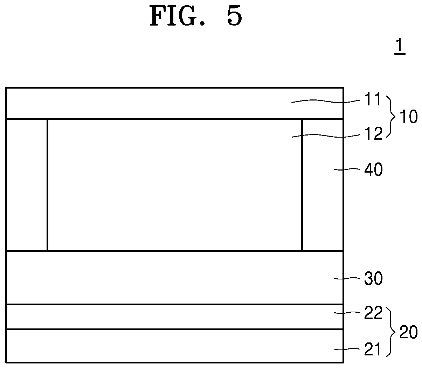

Referring to FIG. 4 a cathode (*e.g.,* a cathode layer) 10 may include a cathode current collector 11 and a cathode active material layer 12 arranged on one side of the cathode current collector 11. On one side surface of the cathode 10, an inactive member 40 may be arranged. Referring to FIG. 4, the inactive member 40 may be arranged on one side surface of the cathode current collector 11 and the cathode active material layer 12. Referring to FIG. 5, the inactive member 40 may have a structure in which the inactive member 40 is arranged on one side surface of the cathode active material layer 12, arranged between the solid electrolyte layer 40 and the cathode current collector 11 opposing the solid electrolyte layer 40, while the inactive member 40 is not arranged on one side surface of the cathode current collector 11.

By including the inactive member 40, cracking of the solid electrolyte layer 30 may be prevented or reduced if (*e.g.,* when) manufacturing and/or during charging and discharging the all solid secondary battery 1 and as a result, the cycling performance of the all solid secondary battery 1 may improve. In an all solid secondary battery 1 not including the inactive member 40, as a non-uniform (substantially non-uniform) pressure is applied to the solid electrolyte layer 30, which is in contact with the cathode layer 10, during manufacturing and/or charging and discharging of the all solid secondary battery 1, the solid electrolyte layer 30 may crack, which may give rise to the growth of lithium metal dendrites and increases the likelihood of a short circuit.

In the all solid secondary battery 1, the thickness of the inactive member 40 may be greater than the thickness of the cathode active material layer 12, or equal to the thickness of the cathode active material layer 12. In one or more embodiments, in the all solid secondary battery 1, the thickness of the inactive member 40 may be substantially the same as the thickness of the cathode 10. Because the thickness of the inactive member 40 is equal to the thickness of the cathode 10, a substantially uniform pressure may be applied between the cathode 10 and the solid electrolyte layer 30, and as the cathode 10 and the solid electrolyte layer 30 are sufficiently flush against each other, interfacial resistances between the cathode 10 and the solid electrolyte layer 30 may decrease. Further, as the solid electrolyte layer 30 is sufficiently sintered during the press manufacturing process of the all solid secondary battery 1, the solid electrolyte layer 30 and the all solid secondary battery 1 including the same may have decreased internal resistance.

The inactive member 40 may be in contact with the solid electrolyte layer 30 while around (*e.g.,* surrounding) a side surface of the cathode 10. As the inactive member 40 is in contact with the solid electrolyte layer 30 while around (*e.g.,* surrounding) a side surface of the cathode 10, in the solid electrolyte layer 30 that is not in contact with the cathode layer 10, cracking of the solid electrolyte layer 30 caused by a pressure difference during the press process may be effectively prevented or reduced. The inactive member 40, while around (*e.g.,* surrounding) a side surface of the cathode layer (or cathode) 10, may be separated from the anode layer (or anode) 20, more specifically, from an anode active material layer 22. The inactive member 40 may be in contact with the solid electrolyte layer 30 while around (*e.g.,* surrounding) a side surface of the cathode 10, and may be apart from the anode 20. The risk of short circuits due to the cathode 10 and the first anode active material layer 22 coming into physical contact with each other, or overcharging of lithium, and/or the like may be then reduced. For example, because the inactive member 40 is concurrently (*e.g.,* simultaneously) arranged on one side surface of the cathode active material layer and one side surface of the cathode current collector 11, the risk of short circuiting due to the cathode current collector 11 and the anode 20 coming into contact may be effectively inhibited or reduced.

Referring to FIG. 4, the inactive member 40 may extend from one side surface of a cathode layer 30 to an end portion of the solid electrolyte layer 30. As the inactive member 40 extends to the end portion of the solid electrolyte layer 30, formation of cracks at the end portion of the solid electrolyte layer 30 may be suppressed or reduced. The end portion of the solid electrolyte layer 30 may be an outermost portion that is contiguous with a side surface of the solid electrolyte layer 30. The inactive member 40 may extend up to the outermost portion that is in contact with a side surface of the solid electrolyte layer 30. The inactive member 40 may be apart from the anode 20, more specifically, from the first anode active material layer 22. The inactive member 40 may extend to the end portion of the solid electrolyte layer 30 and not come in contact with the anode 20. For example, the inactive member 40 may fill a space that extends from one side surface of the cathode 30 to the end portion of the solid electrolyte layer 30.

Referring to FIG. 4, a width of the inactive member 40 extending from one side surface of the cathode 10 to an end portion of the solid electrolyte layer 30 may be, for example, 1 % to 30 %, 1 % to 25 %, 1 % to 20 %, 1 % to 15 %, 1 % to 10 %, or 1 % to 5 %, with respect to a width between one side surface of the cathode 10 and the other side surface opposite to the one side surface. If the width of the inactive member 40 is excessively (or substantially) large (*e.g.,* higher than the above ranges), the energy density of the all solid secondary battery 1 may decrease. If the width of the inactive member 40 is too small (*e.g.,* lower than the above ranges), the effect of placing the inactive member 40 may be negligible.

The surface area of the cathode 10 may be smaller than the surface area of the solid electrolyte layer 30 that is in contact with the cathode 10. The inactive member 40 compensates for the difference in surface area between the cathode 10 and the solid electrolyte layer 30, by being around (*e.g.,* surrounding) the side surface of the cathode 10. Because the surface area of the inactive member 40 compensates for the difference between the surface area of the cathode 10 and the surface area of the solid electrolyte layer 30, cracking of the solid electrolyte layer 30 caused by a pressure difference during the pressing process may be effectively suppressed or reduced. For example, the sum of the surface area of the cathode 10 and the surface area of the inactive member 40 may be equal to the surface area of the solid electrolyte layer 30.

For example, the surface area of the cathode 10 may be less than 100 %, less than 99 %, less than 98 %, less than 97 %, less than 96 %, or less than 95 %, with respect to the surface area of the solid electrolyte layer 30. For example, the surface area of the cathode 10 may be 50 % to less than 100 %, 50 % to 99 %, 55 % to 98 %, 60 % to 97 %, 70 % to 96 %, 80 % to 95 %, or 85 % to 95 %, with respect to the surface area of the solid electrolyte layer 30.

If the surface area of the cathode 10 is equal to or larger than the surface area of the solid electrolyte layer 30, the likelihood of a short circuit occurring due to a physical contact between the anode 10 and the first anode active material layer 22, or a short circuit occurring due to overcharging of lithium, and/or the like may increase. For example, the surface area of the cathode 10 may be equal to the surface area of the cathode active material layer 12. For example, the surface area of the cathode 10 may be equal to the surface area of the cathode current collector 11.

For example, the surface area of the inactive member 40 may be 50 % or less, 40 % or less, 30 % or less, 20 % or less, or 10 % or less, with respect to the surface area of the cathode 10. For example, the surface area of the inactive member 40 may be 1 % to50 %, 5% to 40%, 5% to 30%, 5% to 20%, or 5% to 15%, with respect to the surface area of the cathode 10.

The surface area of the cathode 10 is smaller than the surface area of the anode current collector 21. For example, the surface area of the cathode 10 may be less than 100 %, less than 99 %, less than 98 %, less than 97 %, less than 96 %, or less than 95 %, with respect to the surface area of the anode current collector 21. For example, the surface area of the cathode 10 may be less than 50 % to 100%, 50 % to 99 %, 55 % to 98 %, 60 % to 97 %, 70 % to 96 %, 80 % to 95 %, or 85 % to 95 %, with respect to the surface area of the anode current collector 21. For example, the surface area of the anode current collector 21 may be equal to the surface area of the anode 20. For example, the surface area of the anode current collector 21 may be equal to the surface area of the first anode active material layer 22.

As used herein, "identical" and/or "same" area, length, width, thickness, and/or shape or form, unless otherwise indicated that the area, length, width, thickness, and/or shape or form are deliberately varied to differ from each other, may include "substantially identical" and "substantially the same" area, length, width, thickness, and/or shape or form. For example, the "identical" and/or "same" area, length, width, thickness, and/or shape or form may include instances where an unintended difference in the area, length, width, thickness, and/or shape or form is within a range of less than 3 %, less than 2 %, less than 1 %, less than 0.5 %, or less than 0.1 %,

For example, the thickness of the inactive member 40 may be more than the thickness of the first anode active material layer 22. For example, the thickness of the first anode active material layer 22 may be 50 % or less, 40 % or less, 30 % or less, 20 % or less, or 10 % or less with respect to the thickness of the inactive member 40. For example, the thickness of the first anode active material layer 22 may be 1 % to 50 %, 1 % to 40 %, 1 % to 30 %, 1 % to 20 %, or 1 % to 10 % with respect to the thickness of the inactive member 40.

The inactive member 40 may be, for example, a gasket. Using a gasket as the inactive member 40 may effectively inhibit or reduce crack formation in the solid electrolyte layer 30 due to a pressure differential during the press process.

For example, the inactive member 40 may have a monolayer structure. In one or more embodiments, the inactive member 40 may have a multilayer structure. In the inactive member 40 having a multilayer structure, each layer may have a different composition. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layers may effectively prevent or reduce separation between the cathode 10 and the solid electrolyte layer 30 due to volume changes of the cathode 10 that occur during charging and discharging of the cathode 10 and may improve a film strength of the inactive member 40 by providing adhesion between the support layer(s) and other layers. The support layer(s) may provide support to the inactive member 40, prevent or reduce non-uniformity of the pressure exerted on the solid electrolyte layer 30 during the press process or charging and discharging processes, and prevent or reduce deformations in the shape of the all solid secondary battery 1 being produced.

The inactive member 40 may have, for example, a flame-retardant inactive member. Flame retardancy provided by the flame-retardant inactive member may reduce the risk of thermal runaway and explosion of the all solid secondary battery 1. Consequently, the safety of the all solid secondary battery 1 may further improve. As the flame-retardant inactive member absorbs residual moisture inside the all solid secondary battery 1, degradation of the all solid secondary battery 1 may be prevented or reduced, improving the lifetime characteristics of the all solid secondary battery 1.

The flame-retardant inactive member may include, for example, a matrix and a filler. For example, the matrix may include a substrate and a reinforcing material. For example, the matrix may include a fibrous substrate and a fibrous reinforcing material. As the matrix includes the substrate, the matrix may have elasticity. The matrix may be placed at one or more suitable locations and effectively accommodate volume changes of the all solid secondary battery 1 during charging and discharging. The substrate included in the matrix may include, for example, a first fibrous material. As the substrate includes the first fibrous material, volume changes of the cathode 30 during charging and discharging of the all solid secondary battery 1 may be effectively accommodated, and deformation of the inactive member 40 caused by volume changes of the cathode 30 may be effectively suppressed or reduced. For example, the first fibrous material may be a material having an aspect ratio (*e.g.,* a ratio of length to width in an image of the first fibrous material) of 5 or more, 20 or more, or 50 or more. For example, the first fibrous material may be a material having an aspect ratio of 5 to 1,000, 20 to 1,000, or 50 to 1,000. For example, the first fibrous material may be an insulating material. Because the first fibrous material is an insulating material, a short circuit that may occur between the cathode 30 and the anode 20 due to lithium dendrites and/or the like during charging and discharging of the all solid secondary battery 1 may be effectively prevented or reduced. Examples of the first fibrous material may include at least one of (*e.g.,* at least one selected from among) pulp fibers, insulating polymer fibers, and/or ionically conductive polymer fibers.

As the matrix includes the reinforcing material, strength of the matrix may improve. The matrix may serve to prevent or reduce the all solid secondary battery 1 from undergoing an excessive volume change during charging and discharging and protect the all solid secondary battery 1 from deformation. The reinforcing material included in the matrix may include, for example, a second fibrous material. As the reinforcing material includes the second fibrous material, a more uniform (*e.g.,* a substantially more uniform) increase of the strength of the matrix may be achieved. For example, the second fibrous material may be a material having an aspect ratio (*e.g.,* a ratio of length to width in an image of the second fibrous material) of 3 or more, 5 or more, or 10 or more. For example, the second fibrous material may be a material having an aspect ratio of 3 to 100, 5 to 100, or 10 to 100. For example, the second fibrous material may be a flame-retardant material. Because the second fibrous material is a flame-retardant material, a fire caused by thermal runaway during charging and discharging of the all solid secondary battery 1 or by an external impact may be effectively suppressed or reduced. For example, the second fibrous material may be glass fibers, metal oxide fibers, ceramic fibers, and/or the like.

The flame-retardant inactive member may include a filler in addition to the matrix. The filler may be arranged inside the matrix, may be arranged on a surface of the matrix, or may be arranged both inside and on a surface of the matrix. Examples of the filler may include an inorganic material. The filler included in the flame-retardant inactive member may be for example, a moisture getter. For example, the filler may remove residual moisture from the all solid secondary battery 1 by adsorbing to moisture at a temperature of less than 100 °C, thereby preventing or reducing degradation of the all solid secondary battery 1. Further, if (*e.g.,* when) the temperature of the all solid secondary battery 1 increases to 150 °C or higher due to thermal runaway caused by an external impact, or during charging and discharging of the all solid secondary battery 1, the filler may release the adsorbed moisture to effectively prevent or substantially prevent the all solid secondary battery 1 from catching fire. For example, the filer may be a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, Tl(OH)₃, Zr(OH)₄, Al(OH)₃, and/or any suitable combination thereof. The content (e.g., amount) of the filler included in the flame-retardant inactive member may be, for example, 10 parts by weight to 80 parts by weight, 20 parts by weight to 80 parts by weight, 30 parts by weight to 80 parts by weight, 40 parts by weight to 80 parts by weight, 50 parts by weight to 80 parts by weight, 60 parts by weight to 80 parts by weight, or 65 parts by weight to 80 parts by weight, with respect to 100 parts by weight of a flame-retardant inactive member 40.

The flame-retardant inactive member may include a binder, for example. The binder may include, for example, a curable polymer or a non-curable polymer. The curable polymer may be a polymer that cures by heat and/or pressure. For example, the curable polymer may be solid at room temperature. Examples of the flame-retardant inactive member 40 may include a heat-press curable film and/or a cured product thereof. The thermal-press curable polymer of the heat-press curable film may be TSA-66 by Toray, for example.

In addition to the substrate, the reinforcing material, the filler, and the binder described above, the flame-retardant inactive member may further include other materials. For example, the flame-retardant inactive member may further include at least one of (*e.g.,* at least one selected from among) paper, an insulating polymer, an ionically conductive polymer, an insulating inorganic material, an oxide-based solid electrolyte, and/or a sulfide-based solid electrolyte. The insulating polymer may be an olefin-based polymer such as polypropylene (PP), polyethylene (PE), and/or the like.

The substrate or the reinforcing material included in the flame-retardant inactive member may have a density of, for example, 10 % to 300 %, 10 % to 150 %, 10 % to 140 %, 10 % to 130 %, or 10 % to 120 %, relative to the density of the cathode active material included in a cathode active material layer 12.

The inactive member 40 may be a member not containing any material with electrochemical activity, *i.e.,* not including an electrode active material. The electrode active material may be a material that absorbs/desorbs lithium. The inactive member 40 may be a member composed of a material other than electrode active materials that are utilized in the art.

### All solid secondary battery

An all solid secondary battery according to one or more embodiments may include the cathode; the anode, and the solid electrolyte layer arranged between the cathode and the anode. The anode layer may include an anode current collector and a first anode active material layer arranged on one side of the anode current collector.

Referring to FIGs. 1 to 5, an all solid secondary battery 1 may include a cathode 10; an anode 20; and a solid electrolyte layer 30 arranged between the cathode 10 and the anode 20. The anode 20 may include an anode current collector 21 and a first anode active material layer 22 arranged on one side of the anode current collector 21.

### Cathode

For details of the cathode, refer to the cathode described above.

### Anode

### Anode: Anode Active Material

Referring to FIGs. 1 to 5, the anode 20 may include a first anode active material layer 22. The first anode active material layer 22 may include, for example, an anode active material and a binder.

The anode active material included in the first anode active material layer 22 may be, for example, an anode material capable of forming an alloy or a compound with lithium.

The anode active material included in the first anode active material layer 22 may have, for example, a particulate form (*e.g.,* may include a plurality of particles or be in a form of particles). The anode active material having a particulate form may have an average particle diameter of, for example, 4 µm or less, 3 µm or less, 2 µm or less, 1 µm or less, 500 nm or less, 300 nm or less, or 100 nm or less. For example, the anode active material having a particulate form may have an average particle diameter of 10 nm to 4 µm, 10 nm to 3 µm, 10 nm to 2 µm, 10 nm to 1 µm, 10 nm to 500 nm, 10 nm to 300 nm, or 10 nm to 100 nm. With the anode active material having an average particle diameter within the above ranges, reversible absorption and/or desorption of lithium during charging/discharging may be facilitated. The average particle diameter of the anode active material may be, for example, a median particle diameter (D50) as measured by a laser-type or kind particle size distribution analyzer.

The anode active material included in the first anode active material layer 22 may include, for example, at least one of (*e.g.,* at least one selected from among) a carbonaceous anode active material and/or a metal or metalloid anode active material.

The carbonaceous anode active material may include, for example, amorphous carbon, crystalline carbon, porous carbon, and/or any suitable combination thereof.

The carbonaceous anode active material may be, for example, an amorphous carbon. Examples of the amorphous carbon may include carbon black (CB), acetylene black (AB), furnace black (FB), Ketjen black (KB), graphene, and/or the like; however, the carbonaceous anode active material is not necessarily limited to the aforementioned examples and may be any suitable material categorized as amorphous carbon in the art. Amorphous carbon is carbon with no crystalline structure or an extremely relatively low degree of crystallinity and as such, may be distinguished from crystalline carbon or graphitic carbon.

The carbonaceous anode active material may be porous carbon, for example. For example, pores included in the porous carbon may have a pore volume of 0.1 cc/g to 10.0 cc/g, 0.5 cc/g to 5 cc/g, or 0.1 cc/g to 1 cc/g. For example, pores included in the porous carbon may have an average pore diameter of 1 nm to 50 nm, 1 nm to 30 nm, or 1 nm to 10 nm. The BET specific surface area of the porous carbon may be, for example, 100 m²/g to 3,000 m²/g.

The metal or metalloid anode active material may include at least one of (e.g., at least one selected from among) gold (Au), platinum (Pt), palladium (Pd), silicon (Si), silver (Ag), aluminum (Al), bismuth (Bi), tin (Sn), and/or zinc (Zn), but the present disclosure is not necessarily limited to the aforementioned materials. The metal or metalloid anode active material may be any suitable metal anode active material or metalloid anode active material generally available in the art that can form an alloy or a compound with lithium. For example, nickel (Ni) does not form an alloy with lithium and is therefore not regarded as a metal anode active material.

Among the above anode active materials, the first anode active material layer 22 may include a single anode active material or may include a mixture of multiple different types (kinds) of anode active materials. For example, the first anode active material layer 22 may include amorphous carbon alone or may include one or more of (*e.g.,* one or more selected from among) gold (Au), platinum (Pt), palladium (Pd), silicon (Si), silver (Ag), aluminum (Al), bismuth (Bi), tin (Sn), and/or zinc (Zn). In one or more embodiments, the first anode active material layer 22 may include a mixture of amorphous carbon with at least one of (*e.g.,* at least one selected from among) gold (Au), platinum (Pt), palladium (Pd), silicon (Si), silver (Ag), aluminum (Al), bismuth (Bi), tin (Sn), and/or zinc (Zn). A mixing ratio of amorphous carbon to the metal(s) described herein, such as gold (Au), in such a mixture may be 99:1 to 1:99, 10:1 to 1:2, 5:1 to 1:1, or 4:1 to 2:1 in weight ratio, but without being necessarily limited thereto, may be selected according to required or desired characteristics of the all solid secondary battery 1. As the anode active material has the above compositions, cycling performance of the all solid secondary battery 1 may further improve.

The anode active material included in the first anode active material layer 22 may include, for example, a mixture of first particles composed of amorphous carbon and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In one or more embodiments, the metalloid may be a semiconductor. The content (*e.g.,* amount) of the second particles may be 1 wt% to 99 wt%, 1 wt% to 60 wt%, 8 wt% to 60 wt%, 10 wt% to 50 wt%, 15 wt% to 40 wt%, or 20 wt% to 30 wt%, with respect to the total weight of the mixture. As the content (e.g., amount) of the second particles is within the above ranges, a cycling performance of the all solid secondary battery 1 may further improve.

In one or more embodiments, the first anode active material layer 22 may include a composite anode active material. For example, the composite anode active material may include a carbonaceous support and a metal-based anode active material supported on the carbonaceous support. With the composite anode active material having the above structure, uneven distribution of the metal-based anode active material within the first anode active material layer may be prevented or reduced, thus giving rise to a substantially uniform distribution. As a result, the cycling performance of the all solid secondary battery 1 including the first anode active material layer 22 may further improve.

Examples of the metal-based anode active material supported on the carbonaceous support may include a metal, a metal oxide, a metal-metal oxide composite, and/or any suitable combination thereof. Examples of the metal may include gold (Au), platinum (Pt), palladium (Pd), silicon (Si), silver (Ag), aluminum (Al), bismuth (Bi), tin (Sn), tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. Examples of the metal oxide may include AuₓO_{y} (0<x≤2 and 0<y≤3), PtₓO_{y} (0<x≤1 and 0<y≤2), PdₓO_{y} (0<x≤1 and 0<y≤1), SiₓO_{y} (0<x≤1 and 0<y≤2), AgₓO_{y} (0<x≤2 and 0<y≤1), AlₓO_{y} (0<x≤2 and 0<y≤3), BiₓO_{y} (0<x≤2 and 0<y≤3), SnₓO_{y} (0<x≤1 and 0<y≤2), TeₓO_{y} (0<x≤1 and 0<y≤3), ZnₓO_{y} (0<x≤1 and 0<y≤1), and/or any suitable combination thereof. Examples of the metal-metal oxide composite may include a composite of Au and AuₓO_{y} (0<x≤2 and 0<y≤3), a composite of Pt and PtₓO_{y} (0<x≤1 and 0<y≤2), a composite of Pd and PdₓO_{y} (0<x≤1 and 0<y≤1), a composite of Si and SiₓO_{y} (0<x≤1 and 0<y≤2), a composite of Ag and AgₓO_{y} (0<x≤2 and 0<y≤1), a composite of Al and AlₓO_{y} (0<x≤2 and 0<y≤3), a composite of Bi and BiₓO_{y} (0<x≤2 and 0<y≤3), a composite of Sn and SnₓO_{y} (0<x≤1 and 0<y≤2), a composite of Te and TeₓO_{y} (0<x≤1 and 0<y≤3), a composite of Zn and ZnₓO_{y} (0<x≤1 and 0<y≤1), and/or any suitable combination thereof.

The carbonaceous support may be, for example, an amorphous carbon. Examples of the amorphous carbon may include carbon black (CB), acetylene black (AB), furnace black (FB), Ketjen black (KB), graphene, activated carbon, carbon nanofibers (CNF), carbon nanotubes (CNT), and/or the like. However, the amorphous carbon is not necessarily limited to the aforementioned examples but may be any suitable material classified as amorphous carbon in the art. Amorphous carbon is carbon with no crystalline structure or an extremely or relatively low degree of crystallinity and as such, may be distinguished from crystalline carbon or graphitic carbon. The carbonaceous material may be, for example, a carbonaceous anode active material.

The composite anode active material may have, for example, a particulate form (e.g., may include a plurality of particles or be in a form of particles). The particle diameter (*e.g.,* average particle diameter) of the composite anode active material having a particulate form may be, for example, from 10 nm to 4 µm, 10 nm to 1 µm, 10 nm to 500 nm, 10 nm to 200 nm, or 10 nm to 100 nm. With the composite anode active material having a particle diameter within the above ranges, reversible absorption and/or desorption of lithium during cycling may be further facilitated. The metal-based anode active material supported on the support may have, for example, a particulate form (*e.g.,* may include a plurality of particles or be in a form of particles). For example, the metal-based anode active material may have a particle diameter (*e.g.,* average particle diameter) of from 1 nm to 200 nm, 1 nm to 150 nm, 5 nm to 100 nm, or 10 nm to 50 nm. The carbonaceous support may have, for example, a particulate form (*e.g.,* may include a plurality of particles or be in a form of particles). For example, the carbonaceous support may have a particle diameter (*e.g.,* average particle diameter) of from 10 nm to 2 µm, 10 nm to 1 µm, 10 nm to 500 nm, 10 nm to 200 nm, or 10 nm to 100 nm. With the carbonaceous support having a particle diameter in the above ranges, a more uniform (*e.g.,* a substantially more uniform) distribution within the first anode active material layer may be achieved. For example, the carbonaceous support may be nanoparticles having a particle diameter of 500 nm or less. The particle diameter of the composite anode active material, the particle diameter of the metal-based anode active material, and the particle diameter of the carbonaceous support may be, for example, an average particle diameter. The average particle diameter may be, for example, a median particle diameter (D50) as measured by a laser-type or kind particle size distribution analyzer. In one or more embodiments, the average particle diameter may be automatically determined utilizing a software, or manually determined , from an electron microscope image.

### Anode: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any suitable material generally available as a binder in the art. The binder may be composed of a single type or kind of binder, or multiple binders of different types (kinds).

As the first anode active material layer 22 may include a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if (e.g., when) the first anode active material layer 22 does not contain any binder, the first anode active material layer 22 may be easily delaminated from the anode current collector 21. At an area where the anode current collector 21 is exposed as a result of delamination of the first anode active material layer 22 from the anode current collector 21, the anode current collector 21 may come in contact with the solid electrolyte layer 30, thus increasing the likelihood of a short circuit. For example, the first anode active material layer 22 may be prepared by applying and drying a slurry having dispersed therein materials forming (or providing) the first anode active material layer 22 on the anode current collector 21. By including a binder in the first anode active material layer 22, stable dispersion of the anode active materials within the slurry may be achieved. For example, if (*e.g.,* when) applying the slurry onto the anode current collector 21 by a screen-printing method, it may be possible to prevent or reduce the screen from clogging (for example, clogging by agglomerates of the anode active material).

### Anode: Other Additives

The first anode active material layer 22 may further include other additives utilized in all solid secondary batteries of the related art, such as a filler, a coating agent, a dispersing agent, an ionically (e.g., ion) conductive aid, and/or the like.

### Anode: Solid Electrolyte

The first anode active material layer 22 may further include a solid electrolyte. The solid electrolyte may be, for example, a material of (*e.g.,* selected from among) solid electrolytes included in the solid electrolyte layer 30. The solid electrolyte included in the first anode active material layer 22 may act as a reaction point where the formation of lithium metal starts, may act as a space where the formed lithium metal is stored, or may act as a route for transferring lithium ions in the first anode active material layer 22. In one or more embodiments, the solid electrolyte may not be provided.

For example, in the first anode active material layer 22, the concentration of the solid electrolyte may be high in a region adjacent to the solid electrolyte layer 30 and may be relatively low in a region adjacent to the anode current collector 21. For example, the solid electrolyte in the first anode active material layer 22 may have a concentration gradient in which the concentration gradually decreases from a region adjacent to the solid electrolyte layer 30 to a region adjacent to the anode current collector 21.

### Anode: First Anode Active Material Layer

The ratio (B/A) of initial charge capacity (B) of the first anode active material layer 22 to initial charge capacity (A) of the cathode active material layer may be 0.005 to 0.45. The initial charge capacity of the cathode active material layer 12 may be determined at a maximum charging voltage vs. Li/Li⁺ from a first open circuit voltage. The initial charge capacity of the first anode active material layer 22 may be determined at 0.01 V vs. Li/Li⁺ from a second open circuit voltage.

The maximum charging voltage may be determined by the type or kind of cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or a Li₂S composite may be 2.5 V vs. Li/Li⁺. For example, the maximum charging voltage of Li₂S or a Li₂S composite may be 3.0 V vs. Li/Li⁺. The ratio (B/A) of initial charge capacity (B) of the first anode active material layer 22 to initial charge capacity (A) of the cathode active material layer 12 may be, for example, 0.01 to 0.3, 0.01 to 0.2, or 0.05 to 0.1. The initial charge capacity (mAh) of the cathode active material layer 12 may be obtained by multiplying the charge specific capacity (mAh/g) of the cathode active material layer 12 by the mass (g) of a cathode active material in the cathode active material layer 12. If multiple types (kinds) of cathode active materials are utilized, the product of charge specific density × mass may be calculated for each cathode active material, and the sum of these products may be defined as initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If multiple types (kinds) of anode active materials are utilized, the product of charge specific density × mass may be calculated for each anode active material, and the sum of these products may be defined as initial charge capacity of the first anode active material layer 22. The charge specific density of each of the cathode active material and the anode active material may be measured utilizing an all-solid half-cell utilizing lithium metal as a counter electrode. The initial charge capacity of each of the cathode active material layer 12 and the first anode active material layer 22 may be directly measured by utilizing an all-solid half-cell at a constant current density, for example, 0.1 mA/cm². For the cathode, this measurement may be made for an operating voltage from a 1^{st} open circuit voltage (OCV) to a maximum charge voltage, for example, 3.0 V (vs. Li/Li⁺). For the anode, this measurement may be made for an operating voltage from a second OCV to 0.01 V with respect to the anode, for example, lithium metal. For example, the all-solid half-cell having the cathode active material layer may be charged with a constant current of 0.1 mA/cm² to 3.0 V from the 1^{st} OCV, and the all-solid half-cell having the first anode active material layer may be charged with a constant current of 0.1 mA/cm² to 0.01 V from the second OCV. For example, the current density during the constant current charging may be 0.2 mA/cm² or 0.5 mA/cm². The all-solid half-cell having the cathode active material layer may be charged, for example, to 2.5 V, 2.0 V, 3.5 V, or 4.0 V from the first OCV. The maximum charge voltage of the cathode active material layer may be determined according to the maximum voltage of a cell that satisfies the safety conditions described in JISC8712:2015 by Japanese Standards Association, the entirety of which is hereby incorporated by reference.

If the initial charge capacity of the first anode active material layer 22 is excessively (or substantially) small, the thickness of the first anode active material layer 22 becomes extremely small, and as a result, lithium dendrites formed between the first anode active material layer 22 and the anode current collector 21 during repeated charging/discharging processes may cause collapse of the first anode active material layer 22, thus making it difficult to improve cycling performance of the all solid secondary battery 1. If the charge capacity of the first anode active material layer 22 excessively (or substantially) increases, the energy density of the all solid secondary battery 1 may decrease, and the internal resistance of the all solid secondary battery 1 by the first anode active material layer 22 may increase, thus making it difficult to achieve improved cycling performance of the all solid secondary battery 1.

For example, the first anode active material layer 22 may have a thickness of 50 % or less, 40 % or less, 30 % or less, 20 % or less, 10 % or less, or 5 % or less, with respect to the thickness of the cathode active material layer 12. For example, the first anode active material layer 22 may have a thickness of 1 % to 50 %, 1 % to 40 %, 1 % to 30 %, 1 % to 20 %, 1 % to 10 %, or 1 % to 5 %, with respect to the thickness of the cathode active material layer 12. For example, the first anode active material layer 22 may have a thickness of 1 µm to 20 µm, 2 µm to 15 µm, or 3 µm to 10 µm. If the first anode active material layer 22 is excessively (or substantially) thin (e.g., less than the above ranges), lithium dendrites formed between the first anode active material layer 22 and the anode current collector 21 may cause the first anode active material layer 22 to disintegrate, making it difficult to achieve improved cycling performance of the all solid secondary battery 1. If the thickness of the first anode active material layer 22 excessively (or substantially) increases (e.g., is greater than the above ranges), the energy density of the all solid secondary battery 1 may decrease, and the internal resistance of the all solid secondary battery 1 by the first anode active material layer 22 may increase, thus making it difficult to achieve improved cycling performance of the all solid secondary battery 1. With decreasing thickness of the first anode active material layer 22, for example, the initial charge capacity of the first anode active material layer 22 may also decrease.

### Anode: Second Anode Active Material Layer

Referring to FIG. 3, the all solid secondary battery 1 may further include, for example, a second anode active material layer 24 that is arranged between the anode current collector 21 and the first anode active material layer 22 after charging. The second anode active material layer 24 may be a metal layer including lithium or a lithium alloy. The metal layer may include lithium or a lithium alloy. Therefore, the second anode active material layer 24, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, may be any suitable material generally available and/or generally utilized as a lithium alloy in the art. The second anode active material layer 24 may be composed of one of such alloys, or lithium, or may be composed of one or more suitable types (kinds) of alloys. The second anode active material layer 24 may be, for example, a plated layer. For example, the second anode active material layer 24 may be plated between the first anode active material layer 22 and the anode current collector 21 during a charging process of the all solid secondary battery 1.

The second anode active material layer 24 is not limited to any particular thickness, but may have a thickness of, for example, 1 µm to 500 µm, 1 µm to 200 µm, 1 µm to 150 µm, 1 µm to 100 µm, or 1 µm to 50 µm. If the thickness of the second anode active material layer 24 is excessively (or substantially) small (*e.g*., smaller than the above ranges), the second anode active material layer 24 may fail to sufficiently function as a lithium reservoir. If the thickness of the second anode active material layer 24 is excessively (or substantially) large (*e.g.*, larger than the above ranges), the mass and volume of the all solid secondary battery 1 may increase, and the cycling performance of the all solid secondary battery 1 may be more likely to deteriorate.

In one or more embodiments, in the all solid secondary battery 1, the second anode active material layer 24 may be arranged between the anode current collector 21 and the first anode active material layer 22 prior to assembly of the all solid secondary battery 1, for example. In one or more embodiments in which the second anode active material layer 24 is positioned between the anode current collector 21 and the first anode active material layer 22 prior to assembly of the solid-state secondary battery 1, the second anode active material layer 24 is a metal layer containing lithium and thus acts as a lithium reservoir. For example, prior to assembly of the all solid secondary battery 1, a lithium foil may be positioned between the anode current collector 21 and the first anode active material layer 22.

In one or more embodiments in which the second anode active material layer 24 is plated by charging after assembly of the all solid secondary battery 1, because the second anode active material layer 24 is not included at the time of assembly of the all solid secondary battery 1, energy density of the all solid secondary battery 1 may increase. If charging the all solid secondary battery 1, the charging may be performed to exceed the charging capacity of the first anode active material layer 22. The first anode active material layer 22 may be then overcharged. At the beginning of the charging, lithium may be absorbed into the first anode active material layer 22. The anode active material included in the first anode active material layer 22 may form an alloy or a compound with lithium ions that have moved from the cathode 10. If the charging is performed exceeding the capacity of the first anode active material layer 22, lithium may be precipitated, for example, on the back surface of the first anode active material layer 22, for example, between the anode current collector 21 and the first anode active material layer 22, and the precipitated lithium then may form (or provide) a metal layer that corresponds to the second anode active material layer 24.

The second anode active material layer 24 may be a metal layer mainly composed of lithium (*i.e*., lithium metal). This result may be attributed to the fact that the anode active material included in the first anode active material layer 22 includes a material that forms an alloy or compound with lithium. During discharge, for example, lithium in metal layers in the first anode active material layer 22 and the second anode active material layer 24, may be ionized and migrate toward the cathode 10. Therefore, lithium may be utilized as an anode active material in the all solid secondary battery 1. In one or more embodiments, the first anode active material layer 22 covers the second anode active material layer 24, and as such, may function as a protective layer for the metal layer, for example, the second anode active material layer 24, while inhibiting or reducing precipitation and growth of lithium dendrites. Therefore, short circuiting and capacity fading in the all solid secondary battery 1 may be inhibited or reduced, and consequently, cycling performance of the all solid secondary battery 1 may improve. Further, if (*e.g*., when) the second anode active material layer 24 is disposed by charging after assembly of the all solid secondary battery 1, the anode layer 20, for example, the anode current collector 21, the first anode active material layer 22, and the area therebetween are a Li-free region free of Li while the all solid secondary battery 1 is in the initial state or a fully discharged state.

### Anode: Anode Current Collector

The anode current collector 21 may be formed of a material that does not react with lithium, for example, does not form an alloy or a compound with lithium. Examples of the material forming the anode current collector 21 may include copper (Cu), stainless steel, titanium (Ti), iron (Fe), cobalt (Co), nickel (Ni), and/or the like. However, the material forming (or providing) the anode current collector 21 is not necessarily limited to the aforementioned materials but may be any suitable material available generally utilized and/or generally available as an electrode current collector in the art. The anode current collector 21 may be formed of one type or kind of the aforementioned metals, an alloy of two or more types (kinds) metals thereof, or a covering material. The anode current collector 21 may be, for example, a plate type or kind or a foil type or kind.

Referring to FIG. 2, the all solid secondary battery 1 may further include a thin film 23 containing an element capable of forming an alloy with lithium, on one side of the anode current collector 21. The thin film 23 may be positioned between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but the present disclosure is not limited thereto, and any suitable element generally available and/or generally utilized in the art that is capable of forming an alloy with lithium may be utilized. The thin film 23 may be composed of one of the aforementioned metals or may be composed of an alloy of one or more suitable kinds of metals. As the thin film 23 is arranged on the anode current collector 21, the plated form of the second anode active material layer being plated between the thin film 23 and the first anode active material layer 22 may be further flattened, and cycling performance of the all solid secondary battery 1 may further improve.

For example, the thin film 23 may have a thickness of 1 nm to 800 nm, 10 nm to 700 nm, 50 nm to 600 nm, or 100 nm to 500 nm. If the thickness of the thin film 23 is less than 1 nm, it may be difficult to achieve functions attributable to the thin film 23. If the thickness of the thin film 23 is excessively (or substantially) large (*e.g*., higher than the above ranges), it causes the thin film 23 to absorb lithium by itself, decreasing the content (*e.g*., amount) of lithium precipitated at the anode. As a result, the energy density of solid battery may decrease, and cycling performance of the all solid secondary battery 1 may deteriorate. The thin film 23 may be positioned on the anode current collectors 21 by a vacuum deposition method, a sputtering method, a plating method and/or the like, but the present disclosure is not limited to the aforementioned methods and may be any suitable method generally available and/or generally utilized in the art that is capable of forming the thin film 23.

The anode current collector 21 may include a base film, and a metal layer arranged on one side or both sides (*e.g*., opposite sides) of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), and/or any suitable combination thereof. The polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, the metal layer may include copper (Cu), stainless steel, titanium (Ti), iron (Fe), cobalt (Co), nickel (Ni), and/or an alloy thereof. The anode current collector 21 may further include a metal chip and/or a lead-tab. For detailed descriptions of the base film, the metal layer, the metal chip, and the lead-tab of the anode current collector 21, refer to the cathode current collector 11 described above. Because the anode current collector 21 has the above structure, the weight of the anode may be reduced, and as a result, energy density of the anode and the lithium battery may improve.

### Solid Electrolyte Layer

### Solid Electrolyte Layer: Solid Electrolyte

Referring to FIGs. 1 to 5, the solid electrolyte layer 30 may include a solid electrolyte positioned between the cathode 10 and the anode 20.

Examples of the solid electrolyte may include a sulfide-based solid electrolyte, an oxide-based solid electrolyte, a polymer solid electrolyte, and/or any suitable combination thereof.

The solid electrolyte may be, for example, a sulfide-based solid electrolyte. The sulfide-based solid electrolyte may be, for example, at least one of (*e.g*., at least one selected from among) Li₂S-P₂S₅ and Li₂S-P₂S₅-LiX, wherein X is a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; and/or Li₇₋ₓPS₆₋ₓIₓ, wherein 0≤x≤2. The sulfide-based solid electrolyte may be prepared by treating starting materials, such as Li₂S and P₂S₅, by a method such as melt-quenching, mechanical milling, and/or the like. In one or more embodiments, following such a treatment, heat treatment may be conducted. The sulfide-based solid electrolyte may be amorphous or crystalline, or may be in a mixed state thereof. In one or more embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including Li₂S-P₂S₅. If a sulfide-based solid electrolyte material utilized to form (or provide) the solid electrolyte contains Li₂S-P₂S₅, the mixing molar ratio of Li₂S : P₂S₅ may be in a range of, for example, 20 : 80 to 90 : 10, 25 : 75 to 90 : 10, 30 : 70 to 70: 30, or 40: 60 to 60: 40.

For example, the sulfide-based solid electrolyte may include an argyrodite-type or kind solid electrolyte represented by Formula 1:

**Formula 1** **Li⁺₁₂₋ₙ₋ₓAⁿ⁺X²⁻₆₋ₓY⁻ₓ**

In Formula 1, A may be P, As, Ge, Ga, Sb, Si, Sn, Al, In, Ti, V, Nb or Ta; X may be S, Se or Te; Y may be Cl, Br, I, F, CN, OCN, SCN, or N₃; and 1≤n≤5 and 0≤x≤2. For example, the sulfide-based solid electrolyte may be an argyrodite-type or kind compound including one or more of (e.g., one or more selected from among) Li₇₋ₓPS₆₋ₓClₓ wherein 0≤x≤2, Li₇₋ₓPS₆₋ₓBrₓ wherein 0≤x≤2, and/or Li₇₋ₓPS₆₋ₓIₓ wherein 0≤x≤2. For example, the sulfide-based solid electrolyte may be an argyrodite-type or kind compound including at least one of (*e.g*., at least one selected from among) Li₆PS₅Cl, Li₆PS₅Br, and/or Li₆PS₅I.

An argyrodite-type or kind (*e.g*., argyrodite) solid electrolyte may have a density of 1.5 g/cc to 2.0 g/cc. Because the argyrodite-type or kind solid electrolyte has a density of 1.5 g/cc or more, the internal resistance of the all solid secondary battery may decrease, and Li penetration to the solid electrolyte layer may be more effectively suppressed or reduced.

For example, the oxide-based all-solid electrolyte may be Li_{1+x+y}AlₓTi₂₋ₓSi_{y}P_{3-y}O₁₂ (0<x<2 and 0≤y<3), BaTiO₃, Pb(Zr,Ti)O₃(PZT), Pb₁₋ₓLaₓZr_{1-y} Ti_{y}O₃(PLZT) (0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), and/or any suitable combination thereof. The oxide-based solid electrolyte is produced, for example, by a sintering method and/or the like.

For example, the oxide-based solid electrolyte may be a garnet-type or kind solid electrolyte of (*e.g*., selected from among) Li₇La₃Zr₂O₁₂ (LLZO) and/or Li₃₊ₓLa₃Zr₂₋ₐMₐO₁₂ (M doped LLZO, M=Ga, W, Nb, Ta, or Al, and 0<a<2 and 0≤x≤10).

For example, the polymer solid electrolyte may include a mixture of a lithium salt and a polymer, or may include a polymer having an ion-conducting functional group. For example, the polymer solid electrolyte may be a polymer electrolyte that is in a solid state at 25 °C and 1 atm. For example, the polymer solid electrolyte may not contain liquid. The polymer solid electrolyte may include a polymer. For example, the polymer may be polyethylene oxide (PEO), polyvinylidene fluoride (PVDF), vinylidene fluoride-hexafluoropropylene (PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), and/or any suitable combination thereof. However, the polymer is not limited to the aforementioned examples and may be any suitable material generally available in the art that is utilized in a polymer electrolyte. The lithium salt may be any suitable lithium salt generally available and/or generally utilized in the art. The lithium salt may be, for example, LiPF₆, LiBF₄, LiSbF₆, LiAsF₆, LiClO₄, LiCFsSOs, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more. Here, a weight average molecular weight is measured by a gel permeation chromatography (GPC).

For example, the gel electrolyte may be a polymer gel electrolyte. For example, the gel electrolyte may have a gel state while not containing a polymer.

For example, the polymer gel electrolyte may include a liquid electrolyte and a polymer, or an organic solvent and a polymer having an ion-conducting functional group. For example, the polymer gel electrolyte may be a polymer electrolyte that is in a gel state at 25 °C and 1 atm. For example, the polymer gel electrolyte may have a gel state without containing liquid. The liquid electrolyte utilized in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be (*e.g*., may be selected from among) polymers utilized in solid polymer electrolytes. The organic solvent may be (*e.g*., may be selected from among) organic solvents utilized in liquid electrolytes. The lithium salt may be (*e.g*., may be selected from among) lithium salts utilized in polymer solid electrolytes. The ionic liquid may refer to a room-temperature molten salt or a salt that is in a liquid state at room temperature, which only includes (*e.g*., consists of) ions and has a melting point of room temperature or lower. For example, the ionic liquid may be at least one of (*e.g*., at least one selected from among) compounds containing: a) at least one cation of (*e.g*., selected from among) ammonium, pyrrolidinium, pyridinium, pyrimidinium, imidazolium, piperidinium, pyrazolium, oxazolium, pyridazinium, phosphonium, sulfonium, triazolium, and/or any suitable mixture thereof; and/or b) at least one anion of (*e.g*., selected from among) BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄⁻, CF₃SO₃⁻, (FSO₂)₂N⁻, (C₂F₅SO₂)₂N⁻, (C₂F₅SO₂)(CF₃SO₂)N⁻, and/or (CF₃SO₂)₂N⁻. For example, the polymer solid electrolyte may form (or provide) a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or more, 1,000 Dalton or more, 10,000 Dalton or more, 100,000 Dalton or more, or 1,000,000 Dalton or more.

### Solid Electrolyte Layer: Binder

The solid electrolyte layer 30 may further include, for example, a binder. Examples of the binder included in the solid electrolyte layer 30 may include styrene butadiene rubber (SBR), polytetrafluoroethylene, polyvinylidene fluoride, polyethylene, and/or the like. However, the binder is not limited to the aforementioned examples and may be any suitable binder generally available and/or generally utilized in the art. The binder in the solid electrolyte layer 30 may be identical to or different from a binder included in the cathode active material layer 12 and the anode active material layer 22. In one or more embodiments, the binder may not be provided.

The content (*e.g*., amount) of the binder included in the solid electrolyte layer 30 may be, 0 wt% to 10 wt%, 0 wt% to 5 wt%, 0 wt% to 3 wt%, 0 wt% to 1 wt%, 0 wt% to 0.5 wt%, or 0 wt% to 0.1 wt%, relative to the total weight of the solid electrolyte layer 30.

Provided is a method of preparing an all solid secondary battery, the method including: obtaining a composite, the obtaining including milling a composition including M₂S and molybdenum sulfide (Mo₆S₈); preparing a cathode (*e.g*., a cathode layer) containing a cathode current collector and a cathode active material layer containing a composite cathode active material, utilizing a composition in which the composite is mixed with a solid electrolyte and a binder; preparing an anode (*e.g.*, an anode layer); and disposing a solid electrolyte layer between the cathode and the anode to thereby prepare an all solid secondary battery according to one or more embodiments.

According to one or more embodiments, provided is a method of preparing an all solid secondary battery, the method including: obtaining a Li₂S-Mo₆S₈ composite in which a lithiated Mo₆S₈(LiₓMo₆S₈) (0<x≤4) is complexated by milling a composition containing lithium sulfide (Li₂S) and molybdenum sulfide (Mo₆S₈); preparing a cathode containing a cathode current collector and a composite cathode active material layer containing a composite cathode active material, utilizing a composition in which the composite is mixed with a solid electrolyte and a carbonaceous material; and disposing a solid electrolyte layer between the cathode and the anode.

To the composition containing lithium sulfide (Li₂S) and molybdenum sulfide (Mo₆S₈), a binder may be further added.

To the Li₂S-Mo₆S₈ composite in which a lithiated Mo₆S₈(LiₓMo₆S₈) (0<x≤4) is complexated, a carbonaceous material may be further added, and milling may be performed.

Milling a composition containing lithium sulfide (Li₂S) and molybdenum sulfide (Mo₆S₈) may be carried out at a temperature of 15 °C to 65 °C, at a rotation rate of 10 rpm to 10,000 rpm, 300 rpm to 10,000 rpm, 350 rpm to 5,000 rpm, or 370 rpm to 1,000 rpm, in an inert atmosphere.

The milling may cause a formation of a composite of components of the composite by applying mechanical energy. Through this process, by applying energy through a rotational force to the reactants to form powder fine particles, a chemical reaction by the reactants may be induced through maximized or increased diffusion between powder particles.

The milling may be performed utilizing a milling device, for example, for 0.5 hours to 1,000 hours, 0.5 hours to 100 hours, or 10 hours to 30 hours.

The milling device may be, for example, a vibratory-mill, a Z-mill, a planetary ball-mill, an attrition-mill, a SPEX mill, a vibratory mill, a low-temperature grinder, a friction mill, a shaker mill, a stirring ball mill, a mixer ball mill, vertical and horizontal attritors, and/or the like, and the milling may be performed by any suitable ball-milling device generally available and/or generally utilized for high-energy ball-milling in the art.

The inert atmosphere may be an atmosphere substantially free of oxygen. For example, the inert atmosphere may be an atmosphere containing nitrogen, argon, neon, and/or any suitable combination thereof.

The mechanochemical reaction may be, for example, an exothermic reaction. The reaction that forms the solid electrolyte, represented by Formula 1 may be an exothermic reaction. A temperature of the exothermic reaction may be, for example, 100 °C to 500 °C, 100 °C to 400 °C, 100 °C to 300 °C, or 100 °C to 200 °C. Mechanical milling may be performed, for example, by a dry method without utilizing solvents and/or the like. As the mechanical milling is performed by a dry method, posttreatment processes such as solvent removal, may not be provided.

The solid solution may include a carbonaceous material. A composite may be formed by milling a solid solution and a carbonaceous material.

A composition containing lithium sulfide (Li₂S) and molybdenum sulfide (Mo₆S₈) may be milled to form a solid solution to obtain a composite that is a composite cathode active material.

According to one or more embodiments, a composite cathode active material may be obtained by mixing the composite and a carbonaceous material and milling the resulting mixture. In this composite cathode active material, the composite and the carbonaceous material are in the state of a physical mixture.

During milling, an organic solvent may be added if (*e.g*., when) necessary. By performing bead-mill pulverization within an organic solvent, the pulverized products may prevent or reduce dissolution of lithium (Li) components, and a fine pulverized product having a substantially uniform composition may be obtained.

The solvent may be at least one of (*e.g*., at least one selected from among) alcohol-based solvents, ketone-based solvents, ester-based solvents, glycol ether-based solvents, hydrocarbon-based solvents, ether solvents, glycol-based solvents, and amine-based solvents, wherein examples of the alcohol-based solvents may include isopropyl alcohol, toluene, methanol, ethanol, butanol, hexanol, benzyl alcohol, and isopropyl alcohol; examples of the ketone-based solvents may include acetone, methyl ethyl ketone, methyl isobutyl ketone, and cyclohexanone; examples of the ester-based solvents may include methyl acetate, ethyl acetate, and butyl acetate; examples of the glycol ether-based solvents may include propylene glycol monomethyl ether, ethylene glycol monoethyl ether, ethyl glycol monobutyl ether, 3-methoxy-3 methyl-1-butanol, and diethylene glycol monobutyl ether; examples of the hydrocarbon-based solvents may include benzene, toluene, xylene, cyclohexane, methylcyclohexane, ethylcyclohexane, mineral oil, n-paraffin, and iso-paraffin; examples of the ether-based solvents may include 1,3-dioxolane, 1,4-dioxane, and tetrahydrofuran; examples of the glycol-based solvents may include ethylene glycol, diethylene glycol, propylene glycol, and polyethylene glycol; and examples of the amine-based solvents may include monoethanolamine, diethylamine, triethanolamine, n-methyl-2-pyrrolidone, 2-amino-2-methyl-1-propanol, and N, N-dimethylformamide.

The present disclosure will be described in greater detail through the following Examples and Comparative Examples. However, it will be understood that the examples are provided only to illustrate the present disclosure and not to be construed as limiting the scope of the present disclosure.

### Preparation of Cathode

### Preparation Example 1: Cathode containing composite cathode active material 70Li₂S-30Mo₆S₈ (87.8% (70Li₂S-30Mo₆S₈ composite) + 10% SE + 1% CNF + 1.2% PTFE)

As a cathode active material, a Li₂S-Mo₆S₈ composite, which is a composite cathode active material, was prepared. As a solid electrolyte, argyrodite-type or kind Li₆PS₅Cl crystals (D50=3.0 µm, crystalline) were prepared. Polytetrafluoroethylene (PTFE) was prepared as a binder.

Li₂S (particle size: 100 nm and less than 10 nm by XRD lattice) and plate-shaped Mo₆S₈ were mixed in a weight ratio of 70:30. The plate-shaped Mo₆S₈ had a length (X direction) of 30 µm, a thickness (Z direction) of 5 µm, and a width (Y direction) of 15 µm (*e.g*., Mo₆S₈ is a plurality of the plate-shaped particles having an average length of 30 µm, an average thickness of 5 µm, and an average width of 15 µm).

The resulting mixture was mechanically milled utilizing a ball mill, to produce a Li₂S-Mo₆S₈ composite. The milling conditions were for 10 hours at 25 °C, 600 rpm, in an inert atmosphere. After the milling, in the Li₂S-Mo₆S₈ composite, the length, thickness, and width of Mo₆S₈ were each in a range of 0.01 µm to 1 µm, respectively.

As a solid electrolyte, argyrodite-type or kind Li₆PS₅Cl crystals (D50=3.0 µm, crystalline) were prepared. Carbon nanofibers (CNF) were prepared as a conductive material, and PTFE was utilized as a binder. A cathode mixture was prepared by mixing according to the following weight ratio: a composite cathode active material (Li₂S-Mo₆S₈ composite) : solid electrolyte : conductive material: binder = 87.8:10: 1: 1.2. The cathode mixture was obtained by dry mixing, utilizing a ball mill. The cathode mixture obtained by ball-milling formed ionically conductive and electronically conductive networks.

The cathode mixture was placed on one side of a cathode current collector made of SUS or an aluminum foil carbon-coated on one side thereof, and was plate-pressed for 10 minutes with a pressure of 200 MPa to produce a cathode layer. The thickness of the cathode layer was 120 µm. The thickness of the cathode active material layer was 100 µm, and the thickness of the carbon-coated aluminum foil was 20 µm. The cathode active material layer and the cathode current collector had substantially the same surface area.

### Preparation Example 2: Cathode containing composite cathode active material 60Li₂S-40Mo₆S₈ (87.8% (60Li₂S-40Mo₆S₈ composite) + 10% SE + 1% CNF + 1.2% PTFE)

A cathode was prepared following substantially the same process as Preparation Example 1, except that the mixing weight ratio of lithium sulfide to Mo₆S₈ was changed to 60:40 when preparing the composite cathode active material Li₂S-Mo₆S₈ composite.

### Preparation Example 3: Cathode containing composite cathode active material 70Li₂S- 30Mo₆S₈ -10CNF (87.8% (70Li₂S-30Mo₆S₈-10CNF composite) + 10% SE + 1% CNF + 1.2% PTFE)

As a cathode active material, a Li₂S-Mo₆S₈-CNF composite, which is a composite cathode active material, was prepared. As a solid electrolyte, argyrodite-type or kind Li₆PS₅Cl crystals (D50=3.0 µm, crystalline) were prepared. PTFE was prepared as a binder.

### Step (e.g., act or task) 1

Li₂S (particle size: 100 nm and less than 10 nm by XRD lattice) and plate-shaped Mo₆S₈ were mixed in a weight ratio of 70:30. The resulting mixture was mechanically milled utilizing a ball mill, to produce a Li₂S-Mo₆S₈ composite. The milling conditions were for 10 hours at 25 °C, 600 rpm. The milling energy applied to a sample during milling was 20 G.

The plate-shaped Mo₆S₈ had a length (X direction) of 30 µm, a thickness (Z direction) of 5 µm, and a width (Y direction) of 15 µm (e.g., Mo₆S₈ is a plurality of the plate-shaped particles having an average length of 30 µm, an average thickness of 5 µm, and an average width of 15 µm).

### Step 2

The Li₂S-Mo₆S₈ composite and carbon nanofibers (CNF) were mixed in a weight ratio of 100:20. The resulting mixture was mechanically milled utilizing a ball mill, to produce a Li₂S-Mo₆S₈-CNF composite. The milling conditions were for 10 hours at 25 °C, 600 rpm. The milling energy applied to a sample during milling was 20 G. The Li₂S-Mo₆S₈-CNF composite was utilized as a composite cathode active material.

As a solid electrolyte, argyrodite-type or kind Li₆PS₅Cl crystals (D50=3.0 µm, crystalline) were prepared, and as a binder, PTFE was prepared. As a conductive material, Ketjen black was prepared. The above components were mixed in a weight ratio of composite cathode active material: solid electrolyte : binder: conductive material = 87.8:10:1:1.2 to produce a cathode mixture. The cathode mixture was obtained by dry mixing, utilizing a ball mill. The cathode mixture obtained by ball-milling formed ionically conductive and electronically conductive networks.

The cathode mixture was placed on one side of a cathode current collector made of SUS or an aluminum foil carbon-coated on one side thereof, and was plate-pressed for 10 minutes with a pressure of 200 MPa to produce a cathode layer. The thickness of the cathode layer was 120 µm. The thickness of the cathode active material layer was 100 µm, and the thickness of the carbon-coated aluminum foil was 20 µm.

### Preparation Example 4: Cathode containing composite cathode active material 60Li₂S-40Mo₆S₈-10CNF (87.8% (60Li₂S-40Mo₆S₈-10CNF composite) + 10% SE + 1% CNF + 1.2% PTFE)

A cathode was prepared following substantially the same process as Preparation Example 3, except that the mixing weight ratio of lithium sulfide to Mo₆S₈ was changed to 60:40 when preparing the composite cathode active material Li₂S-Mo₆S₈ composite.

### Preparation Example 5: Cathode containing composite cathode active material 65Li₂S-35Mo₆S₈-10CNF (87.8% (65Li₂S-35Mo₆S₈-10CNF composite) + 10 % SE + 1 % CNF + 1.2% PTFE)

A cathode was prepared following substantially the same process as Preparation Example 3, except that the mixing weight ratio of lithium sulfide to Mo₆S₈ was changed to 65:35 when preparing the composite cathode active material Li₂S-Mo₆S₈ composite.

### Comparative Preparation Example 1: Cathode containing Li₂S alone (87.8% Li₂S alone + 10% SE + 1% CNF + 1.2% PTFE)

A cathode was prepared following substantially the same process as Preparation Example 1, except that Li₂S was utilized instead of the composite cathode active material when preparing the cathode.

### Comparative Preparation Example 2: Cathode containing Li₂S-CNF (87.8 5 Li₂S-CNF+ 10% SE + 1% CNF + 1.2% PTFE)

In the preparation of the composite cathode active material, Li₂S was utilized instead of the Li₂S-Mo₆S₈ composite, and Li₂S and carbon nanofibers (CNF) were mixed in a weight ratio of 50:10. The resulting mixture was mechanically milled utilizing a ball mill, to produce a Li₂S-CNF composite. The milling conditions were for 10 hours at 25 °C, 600 rpm. The Li₂S-CNF composite was utilized as a composite cathode active material.

### Comparative Preparation Example 3: Cathode containing sulfur (S₈) alone (87.8% S₈ alone + 10% SE + 1% CNF + 1.2% PTFE)

A cathode was prepared following substantially the same process as Preparation Example 1, except that sulfur (Ss) was utilized instead of the composite cathode active material when preparing the cathode.

### Comparative Preparation Example 4: Cathode containing 70Li₂S+30Mo₆S₈ simple mixture (87.8% (70Li₂S+30Mo₆S₈ simple mixture) + 10% SE + 1% CNF + 1.2% PTFE)

Li₂S and Mo₆S₈ were mixed in a weight ratio of 70:30. The resulting mixture was utilized as a cathode active material as is.

A cathode was prepared following substantially the same process as Preparation Example 1, except that the above cathode active material was utilized instead of the composite cathode active material.

### Comparative Preparation Example 5: Cathode containing 70Li₂S-30MoS₂ composite (87.8% (70Li₂S-30MoS₂ composite) + 10% SE + 1% CNF + 1.2% PTFE)

A cathode was prepared following substantially the same process as Preparation Example 1, except that MoS₂ was utilized instead of Mo₆S₈ when preparing the composite.

### Comparative Preparation Example 6: Cathode containing concurrently (e.g., simultaneously) ball-milled lithium sulfide, Mo₆S₈ and CNF (87.8% (simultaneously ball-milled lithium sulfide, Mo₆S₈ and CNF) + 10% SE + 1% CNF + 1.2% PTFE)

A 70Li₂S-30Mo₆S₈ composite and carbon nanofibers (CNF) were mixed such that the mixing ratio of Li₂S, Mo₆S₈ and CNF become 70:30:20 in weight. The resulting mixture was mechanically milled utilizing a ball mill, to produce a Li₂S-Mo₆S₈-CNF composite. The milling conditions were for 10 hours at 25 °C, 600 rpm.

When performed according to the aforementioned process, obtaining a desired or suitable Li₂S-Mo₆S₈-CNF composite was difficult.

If carried out according to Comparative Preparation Example 6, unlike Preparation Example 3, lithiation of Mo₆S₈ was incomplete such that the formation of LiₓMo₆S₈ was hindered, and the effect of reducing particle size due to concurrent (*e.g*., simultaneous) mixing with CNF was insignificant such that the particle size of the composite was larger than Preparation Example 3. As a result, the initial capacity, retention rate, and lifespan of the all solid secondary battery were decreased.

### Comparative Preparation Example 7: Cathode containing 70Li₂S-30Mo₆S₈ composite (97.8% (70Li₂S-30Mo₆S₈ composite) + 1% CNF + 1.2% PTFE)

A cathode mixture was prepared by mixing composite cathode active material Li₂S-Mo₆S₈ composite : conductive material: binder = 97.8 : 1 : 1.2 in a weight ratio when preparing a cathode mixture. A cathode was prepared following substantially the same process as Preparation Example 1, except that the cathode mixture was obtained by dry mixing utilizing a ball mill.

### Comparative Preparation Example 8: Cathode containing 70Li₂S-30Mo₆S₈ composite (88.8% (70Li₂S-30Mo₆S₈ composite)+ 10% SE + 1.2% PTFE)

A cathode mixture was prepared by mixing a composite cathode active material Li₂S-Mo₆S₈ composite : electrolyte : binder = 88.8: 10:1.2 in a weight ratio when preparing a cathode mixture. A cathode was prepared following substantially the same process as Preparation Example 1, except that the cathode mixture was obtained by dry mixing utilizing a ball mill.

### Preparation of All Solid Secondary Battery

### Example 1

### Cathode Layer

As a cathode layer, the cathode prepared according to Preparation Example 1 was utilized.

### Preparation of Anode

As an anode current collector, a 10 µm-thick SUS sheet was prepared. As anode active materials, carbon black (CB) having a primary particle diameter of 30 nm and silver (Ag) particles having an average particle diameter of 60 nm were prepared.

In a vessel containing 4 grams of mixed powder containing CB and Ag particles in a weight ratio of 3:1, 4 grams of an n-methyl-2-pyrrolidone (NMP) solution containing 7 wt% of polyvinylidene fluoride (PVDF) binder (#9300, KUREHA) were added to prepare a mixed solution. The prepared mixed solution was stirred while slowly adding NMP to this mixed solution, to produce a slurry. The prepared slurry was applied to the SUS sheet by a bar coater, and dried in open air at 80 °C for 10 minutes, and then vacuum-dried at 40 °C for 10 hours to prepare a laminate. The prepared laminate was cold roll-pressed to flatten the surface thereof, to prepare an anode having the first anode active material layer/anode current collector structure. The thickness of the anode active material layer was 15 µm. The first anode active material layer and the anode current collector had substantially the same surface area.

### Preparation of Solid Electrolyte Layer

As a solid electrolyte, argyrodite-type or kind crystal Li₆PS₅Cl solid electrolyte (D₅₀=3.0 µm, crystalline) was utilized, and 1.5 parts by weight of an acryl-based binder was added to 98.5 parts by weight of the solid electrolyte to prepare a mixture. The prepared mixture was stirred while adding octyl acetate thereto, to prepare a slurry. The prepared slurry was applied onto a 15-µm thick nonwoven fabric placed on a 75 µm-thick polyethylene terephthalate (PET) substrate by utilizing a bar coater, and dried in open air at a temperature of 80 °C for 10 minutes to prepare a laminate. The prepared laminate was vacuum-dried at a temperature of 80 °C for 2 hours to prepare a solid electrolyte layer.

### Inactive Member

A slurry obtained by mixing cellulose fibers, glass fibers, aluminum hydroxide (Al(OH)₃), an acryl-based binder, and a solvent was molded in the form of a gasket, and then the solvent was removed therefrom to produce a flame-retardant inactive member.

The weight ratio of pulp fibers (cellulose fibers) : glass fibers : aluminum hydroxide (Al(OH)₃): acryl-based binder was 20 : 8 : 70 : 2. The thickness of the inactive member was 120 µm.

Before placing the produced flame-retardant inactive member on the solid electrolyte layer, the flame-retardant inactive member was thermally treated under vacuum at 80 °C for 5 hours to remove moisture and/or the like therefrom.

### Preparation of All Solid Secondary Battery

Referring to FIG. 1, the solid electrolyte layer was arranged on the anode such that the first anode active material layer is in contact with the solid electrolyte layer, and the cathode was arranged on the solid electrolyte layer. A gasket was arranged around the cathode while around (*e.g*., surrounding) the cathode to thereby prepare a laminate. The thickness of the gasket was 120 µm. The flame-retardant inactive member was utilized as the gasket. The gasket was arranged so as to be in contact with a side surface of the cathode, and the solid electrolyte layer. The cathode was arranged in the center portion of the solid electrolyte layer, and the gasket was placed extending to a terminal portion of the solid electrolyte layer, while around (*e.g*., surrounding) the cathode. The surface area of the cathode was 90 % of the surface area of the solid electrolyte layer, and the gasket was arranged in the entire remaining 10 % of the surface area of the solid electrolyte layer that does not have the cathode arranged therein.

The prepared laminate was plate-pressed with a pressure of 500 MPa at 85 °C for 30 minutes. Such a press treatment may sinter the solid electrolyte layer and improve battery performance. The thickness of the sintered solid electrolyte layer was 45 µm. The density of the argyrodite-type or kind crystal Li₆PS₅Cl solid electrolyte included in the sintered solid electrolyte layer was 1.6 g/cc. The surface area of the solid electrolyte layer was substantially the same as the surface area of the anode.

The pressed laminate was placed in a pouch and vacuum-sealed to produce an all solid secondary battery. A part of the cathode current collector and the anode current collector was extended out of the sealed battery and utilized as a cathode terminal and an anode terminal, respectively.

### Examples 2 to 5

An all solid secondary battery was prepared following substantially the same process as Example 1, except the cathodes of Preparation Examples 2 to 5 were utilized, respectively, as the cathode layer, instead of the cathode of Preparation Example 1.

### Comparative Examples 1 to 8

An all solid secondary battery was prepared following substantially the same process as Example 1, except the cathodes of Comparative Preparation Examples 1 to 8 were utilized, respectively, as the cathode layer, instead of the cathode of Preparation Example 1.

### Evaluation Example 1: Evaluation of Cathode Impedance (Resistance) and Ionic Conductivity

The impedance of the cathodes of the all solid secondary batteries of Examples 1 to 5 and Comparative Examples 1 to 8 was evaluated by a DC polarization method.

As a result of the evaluation, it was found that the ionic and electronic conductivities of the cathodes of Examples 1 to 5 were higher compared to those of Comparative Examples 1 to 8. These results indicate that if (*e.g*., when) a cathode containing a composite containing Mo₆S₈ is utilized, the output characteristics of an all solid secondary battery having the cathode may improve due to relatively low interfacial resistance characteristics of the electrode and electrolyte.

It was found that the all solid secondary battery of Comparative Example 5, which has a cathode containing a composite utilizing MoS₂, shows decreased ionic conductivity characteristics and thus further increased resistance, compared to Example 1 that had a cathode containing a MoeSs-containing composite.

It was found that the all solid secondary battery of Comparative Example 6 shows poor resistance characteristics, because the process of concurrently (*e.g*., simultaneously) mixing Mo₆S₈, lithium sulfide, and carbon failed to produce a desired or suitable composite.

### Evaluation Example 2: XRD Analysis

XRD spectra were measured utilizing Cu Kα radiation for the composite cathode active materials prepared in Examples 1 and 3 and Comparative Examples 1, 4, and 6. The XRD spectra were obtained utilizing X'pert pro (PANalytical) utilizing Cu Kα radiation (1.54056 Å).

In the measured XRD spectrum, the diffraction angle position where the peak for the crystal plane (122) of Mo₆S₈ appears was investigated and is shown in Table 1. The peak for the crystal plane (122) of Mo₆S₈ appears at a diffraction angle of 2θ=33±0.5°, for example, at a diffraction angle of 2Θ (°) of 33.5°. In Table 1, based on the diffraction angle 2Θ (°) of the composite of Example 1 being 33.5°, cases in which the diffraction angle is shifted or substantially shifted by or at most 0.5°, for example, shifted by 0.1° to 0.3°, were indicated by O, and cases in which no shifts or no substantial shifts in diffraction angle were observed were indicated by X.

**Table 1**

| Item | Shift (°) |
|---|---|
| Example 1 (70Li₂S-30Mo₆S₈ composite) | O |
| Example 3 (70Li₂S-30Mo₆S₈-10CNF composite) | O |
| Comparative Example 1 (Cathode containing Li₂S alone) | X |
| Comparative Example 4 (Cathode containing 70Li₂S+30Mo₆S₈ simple mixture) | X |
| Comparative Example 6 (Simultaneously ball-milled lithium sulfide, Mo₆S₈, and CNF) | X |

As can be seen in Table 1, as shown in Examples 1 and 3, the diffraction angle 2Θ concerning lithium sulfide was shifted to a lower angle. From this observation, it could be confirmed that lithiated Mo₆S₈ (LiₓMo₆S₈) was formed.

Further, it was confirmed that unlike Examples 1 and 3, Comparative Examples 1 to 6 failed to obtain lithiated Mo₆S₈ (LiₓMo₆S₈). Further, according to Comparative Example 5 (cathode containing 70Li₂S-30MoS₂ composite), no peaks at a diffraction angle 2Θ (°) of 33.9° or peaks related thereto were observed.

### Evaluation Example 3: Lifespan Characteristics Test

Charge/discharge characteristics of the all solid secondary batteries prepared in Examples 1 to 5, and Comparative Examples 1 to 8 were evaluated by the following charge/discharge test. The charge/discharge test was performed while the all solid secondary battery was placed in a constant-temperature bath at 45 °C.

The charge/discharge test was performed while the all solid secondary battery was placed in a constant-temperature bath at 45 °C.

In the first cycle, each battery was charged at a constant current of 0.1 C for 12.5 hours until the battery voltage reached a voltage of 2.8 V. Then, the battery was discharged at a constant current of 0.1 C for 12.5 hours until the battery voltage reached 1.0 V.

The discharge capacity in the first cycle was utilized as a standard capacity. The standard capacity was expressed as specific capacity of Li₂S in Table 2.

After the second cycle, charge and discharge were performed up to 150 cycles under substantially the same conditions as the first cycle. The results of the measurement are shown in Table 2. Initial efficiency is represented by Equation 1. Initial Efficiency [%] = [Discharge Capacity in 1st Cycle/Charge Capacity in 1st Cycle] × 100

Cycle number refers to the number of cycles required for the discharge capacity to decrease to 80 % of the standard capacity after the second cycle. The higher the cycle number, the better lifespan characteristics the all solid secondary battery is considered to have. In Table 2, LiₓMo₆S₈ formation was confirmed by observation of a peak shift to a lower angle on XRD. That is, formation or substantial formation of LiₓMo₆S₈ was indicated by ∘, and no formation or no substantial formation of LiₓMo₆S₈ was indicated by ×.

**[Table 2]**

| Item | LiₓMo₆S₈ formation | (Electrode/Active material) Specific capacity [mAh/g] | Initial efficiency [%] | The number of cycles [cycles] |
|---|---|---|---|---|
| Example 1 (70Li₂S-30Mo₆S₈ Composite)+ 10SE + 1CNF + 1.2PTFE) | ○ | 490/800 | 85 | 150 |
| Example 2 (60Li₂S-40Mo₆S₈ composite + 10SE + 1CNF + 1.2PTFE) | ○ | 481/900 | 87 | 200 |
| Example 3 (70Li₂S-30Mo₆S₈-10CNF composite) + 10SE + 1CNF + 1.2PTFE | ○ | 513/900 | 87.2 | 282 |
| Example 4 (60Li₂S-40Mo₆S₈-10CNF composite)+ 10SE + 1CNF + 1.2PTFE) | ○ | 500/1000 | 89.5 | 310 |
| Example 5 (65Li₂S-35Mo₆S₈10CNF composite)+ 10SE + 1CNF + 1.2PTFE) | ○ | 505/950 | 88.2 | 292 |
| Comparative Example 1 (containing Li₂S alone + 10SE + 1CNF + 1.2PTFE) | × | ○ | ○ | ○ |
| Comparative Example 2 (containing Li₂S-CNF + 10SE + 1CNF + 1.2PTFE) | × | 100/400 | ○ | ○ |
| Comparative Example 3 (containing S₈ alone + 10SE + 1CNF + 1.2PTFE) | × | ○ | ○ | ○ |
| Comparative Example 4 (containing 70Li₂S+30Mo₆S₈ simple mixture + 10SE + 1CNF + 1.2PTFE) | × | 50/100 | ○ | ○ |
| Comparative Example 5 (70Li₂S-30MoS₂ composite + 10SE + 1CNF + 1.2PTFE) | ○ | 350/500 | 85 | 50 |
| Comparative Example 6 (simultaneous ball-milled lithium sulfide, simultaneous ball-milled Mo₆S₈ and CNF +10SE+ 1CNF + 1.2PTFE) | × | 280/400 | 83 | 25 |
| Comparative Example 7 (70Li₂S-30Mo₆S₈ composite + 1CNF + 1.2PTFE) | ○ | 205/300 | 78 | 35 |
| Comparative Example 8 (70Li₂S-30Mo₆S₈ composite)+ 10%SE + 1.2PTFE | ○ | 176/280 | 80 | 25 |

As shown in Table 2, the all solid secondary batteries of Examples 1 to 4, employing the composite cathode active materials of Preparation Examples 1 to 4, showed improved discharge capacity, initial efficiency and lifespan characteristics compared to the all solid secondary batteries of Comparative Examples 1 to 8, employing the composite cathode active materials of Comparative Preparation Examples 1 to 8, respectively.

The all solid secondary battery of Example 1 was found to have improved initial efficiency and lifespan characteristics, and increased specific capacity, compared to the all solid secondary battery of Comparative Example 7, which had a cathode comparative active material layer free of solid electrolyte when preparing the cathode active material layer, and compared to the all solid secondary battery of Comparative Example 8, which has the cathode active material layer free of carbonaceous material as conductive material.

### Evaluation Example 4: High-rate Characteristics

The all solid secondary batteries prepared in Examples 1 to 5 and Comparative Examples 1 to 4 were evaluated for high-rate characteristics, and the following test was performed by placing the all solid secondary batteries in a constant-temperature bath at 60 °C.

Each battery was charged at 60 °C at a constant current of 0.1 C until the battery voltage reached 4.2 V, and under a constant voltage of 4.2 V, charged to a current value of 0.1 C. Subsequently, the battery was discharged with a constant current of 0.1 C until the battery voltage reached 1.0 V.

Subsequently, each battery was charged at a constant current of 0.1 C until the battery voltage reached 4.2 V, and under a constant voltage of 4.2, charged to a current value of 0.1 C, and then discharging was performed at a constant current of 0.33 C until the battery voltage reached 1.0 V.

After the charging and discharging, high-rate capacity was evaluated by Equation 2, and the results thereof are shown in Table 3. High-rate capacity (%) = (Discharge capacity at 0.33 C / Discharge capacity at 0.1 C) X 100

The measurement results are shown in Table 3.

**[Table 4]**

| Item | High-rate capability (%) |
|---|---|
| Example 1 (70Li₂S-30Mo₆S₈ composite + 10SE + 1CNF + 1.2PTFE) | 88 |
| Example 2 (60Li₂S-40Mo₆S₈ composite + 10SE + 1CNF + 1.2PTFE) | 93 |
| Example 3 (70Li₂S-30Mo₆S₈-10CNF composite + 10SE + 1CNF + 1.2PTFE) | 90 |
| Example 4 (60Li₂S-40Mo₆S₈ -10CNF composite + 10SE + 1CNF + 1.2PTFE) | 96 |
| Example 5 (65Li₂S-35Mo₆S₈-10CNF composite + 10SE + 1CNF + 1.2PTFE) | 94 |
| Comparative Example 1 (cathode containing Li₂S alone + 10SE + 1CNF + 1.2PTFE) | 0 |
| Comparative Example 2 (cathode containing Li₂S-CNF + 10%SE + 1%CNF + 1.2PTFE) | 11 |
| Comparative Example 3 (cathode containing S₈ alone + 10%SE + 1%CNF + 1.2PTFE) | 0 |
| Comparative Example 4 (cathode containing 70Li₂S + 30Mo₆S₈ simple mixture + 10SE + 1CNF + 1.2PTFE) | 0 |

As shown in Table 3, the all solid secondary batteries of Examples 1 to 5 show improved high-rate capacities compared to Comparative Examples 1 to 4. It was also confirmed that the all solid secondary batteries of Comparative Examples 5 and 6 had deteriorated high-rate capacity compared to that of Examples 1 to 4.

### Evaluation Example 5: Energy Density

The all solid secondary batteries prepared in Examples 1 to 5 and Comparative Examples 1 to 8 were operated at 0.1 C and evaluated for volumetric energy density as follows.

Volumetric energy density (Capacity * average voltage / volume = Ah*V/ L=Wh/L) was evaluated relatively by volume difference.

The results of the energy density evaluation showed that the all solid secondary batteries of Examples 1 to 5 had an increase of energy density compared to Comparative Examples 1 to 8.

As described above, the all solid secondary battery associated with the present examples may be applied to a variety of portable devices, vehicles, and/or the like.

According to one aspect, an all solid secondary battery can be provided, which has improved cathode impedance characteristics, and by employing the same, has improved energy density and high-rate capability.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. An all solid secondary battery (1) comprising:
a cathode layer (10);
an anode layer (20); and
a solid electrolyte layer (30) between the cathode layer (10) and the anode layer (20),
wherein the cathode layer (10) comprises a cathode current collector (11) and a cathode active material layer (12) on at least one side of the cathode current collector (11),
wherein the cathode active material layer (12) comprises a composite cathode active material, a carbonaceous material, and a solid electrolyte,
wherein the composite cathode active material comprises a composite comprising:
M₂S; and
one or more molybdenum compounds selected from among molybdenum sulfide (Mo₆S₈) and lithiated molybdenum sulfide,
M being alkali metal,
the alkali metal being lithium (Li) or sodium (Na), and
wherein the anode layer (20) comprises an anode current collector (21) and a first anode active material layer (22) on at least one side of the anode current collector (21).

2. The all solid secondary battery (1) as claimed in claim 1, wherein the all solid secondary battery (1) comprises 60 parts by weight to 99 parts by weight of M₂S, and 1 part by weight to 40 parts by weight of the molybdenum compounds, with respect to 100 parts by weight of the composite cathode active material.

3. The all solid secondary battery (1) as claimed in claim 1 or 2, wherein the carbonaceous material comprises a fibrous carbonaceous material,
wherein the fibrous carbonaceous material comprises a carbon nanostructure,
wherein the carbon nanostructure comprises carbon nanofibers, carbon nanotubes, carbon nanobelts, carbon nanorods, or a combination thereof, and
wherein an amount of the carbonaceous material is 0.1 parts by weight to 10 parts by weight, with respect to 100 parts by weight of a total weight of the cathode active material layer (12).

4. The all solid secondary battery (1) as claimed in any of claims 1 to 3, wherein an amount of the solid electrolyte in the cathode active material layer (12) is 1 part by weight to 15 parts by weight, with respect to 100 parts by weight of a total weight of the cathode active material layer (12), and
wherein the solid electrolyte comprises a sulfide-based solid electrolyte, an oxide-based solid electrolyte, a polymer solid electrolyte, or a combination thereof.

5. The all solid secondary battery (1) as claimed in any of claims 1 to 4, wherein the composite further comprises a carbonaceous material, and
wherein an amount of the carbonaceous material is 1 part by weight to 20 parts by weight, with respect to 100 parts by weight of a total weight of the M₂S and the molybdenum compounds, and/or wherein the composite further comprises a carbonaceous material, wherein the carbonaceous material of the composite comprises a fibrous carbonaceous material,
wherein the fibrous carbonaceous material comprises a carbon nanostructure, and
wherein the carbon nanostructure comprises carbon nanofibers, carbon nanotubes, carbon nanobelts, carbon nanorods, or a combination thereof.

6. The all solid secondary battery (1) as claimed in any of claims 1 to 5, wherein the molybdenum compounds comprise the molybdenum sulfide,
wherein the molybdenum sulfide has a form of plates or a form of fibers, and has a specific surface area of 1 m²/g to 50 m²/g,
wherein if the molybdenum sulfide has the form of fibers, the fibers of the molybdenum sulfide have an average diameter of 1 µm to 50 µm and an average thickness of 5 nm to 50 nm,
wherein if the molybdenum sulfide has the form of plates, the plates of the molybdenum sulfide have an average length of 1 µm to 50 µm, an average thickness of 0.01 µm to 10 µm, and an average width of 1 µm to 30 µm, and
wherein, after milling, the molybdenum sulfide has a length, a thickness, and a width each in a range of 0.01 µm to 1 µm.

7. The all solid secondary battery (1) as claimed in any of claims 1 to 6, wherein the M₂S is lithium sulfide (Li₂S), an average particle diameter of the molybdenum sulfide in a form of particles is greater than an average particle diameter of the lithium sulfide in a form of particles, the average particle diameter of the lithium sulfide is 0.1 nm to 10 µm, and the average particle diameter of the composite is 0.1 µm to 50 µm, and/or
wherein the M₂S is lithium sulfide (Li₂S), and the composite is a Li₂S-Mo₆S₈ composite, a Li₂S-LiₓMo₆S₈ (0<x≤4) composite, or a combination thereof.

8. The all solid secondary battery (1) as claimed in any of claims 1 to 7, wherein the composite comprises transition metal sulfides comprising one or more transition metals selected from among iron, copper, cobalt, nickel, vanadium, niobium, tantalum, chromium, molybdenum, tungsten, zinc, manganese, and titanium, and
wherein the transition metal sulfides further comprise Ti₄O₇-MoS₂, V₂O₅-MoS₂, TiS₂, NbS₂, Nb₃S₄, or a combination thereof.

9. The all solid secondary battery (1) as claimed in any of claims 1 to 8, wherein the first anode active material layer (22) comprises an anode active material and a binder, and wherein the anode active material has a form of particles, and the particles have an average particle diameter of 4 µm or less, and further comprising an inactive member (40) on at least one side surface of the cathode;
and/or wherein the first anode active material layer (22) comprises an anode active material, wherein the anode active material layer (22) comprises at least one selected from among a carbonaceous anode active material and a metal or metalloid anode active material,
wherein the carbonaceous anode active material comprises amorphous carbon, crystalline carbon, porous carbon, or a combination thereof, and
wherein the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof.

10. The all solid secondary battery (1) as claimed in in any of claims 1 to 9, wherein the first anode active material layer (22) comprises an anode active material, wherein the anode active material comprises a mixture of first particles comprising amorphous carbon, and second particles comprising a metal or metalloid, and wherein an amount of the second particles is 1 wt% to 60 wt% with respect to a total weight of the mixture.

11. The all solid secondary battery (1) as claimed in any of claims 1 to 10, further comprising a second anode active material layer (24) between the anode current collector (21) and the first anode active material layer (22), and/or between the anode current collector (21) and the solid electrolyte layer (30), wherein the second anode active material layer (24) is a metal layer, the metal layer comprising lithium or a lithium alloy.

12. The all solid secondary battery (1) as claimed in any of claims 1 to 11, wherein the electrolyte layer comprises a solid electrolyte, a gel electrolyte, or a combination thereof, the solid electrolyte comprising a sulfide-based solid electrolyte, an oxide-based solid electrolyte, a polymer solid electrolyte, or a combination thereof, the gel electrolyte comprising a polymer gel electrolyte; and/or
wherein the electrolyte layer comprises a solid electrolyte, wherein the solid electrolyte comprises the sulfide-based solid electrolyte;
wherein the sulfide-based solid electrolyte is at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n each are a positive number, and Z is Ge, Zn or Ga, Li₂S-GeS₂, Li₂S-SiS₂-Li₃PO₄, Li₂S-SiS₂-LiₚMO_{q}, wherein p and q each are a positive number and M is P, Si, Ge, B, Al, Ga or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2,
wherein the sulfide-based solid electrolyte comprises an argyrodite-type solid electrolyte,
wherein the argyrodite-type solid electrolyte comprises one or more selected from among Li₆PS₅Cl, Li₆PS₅Br, and LisPSsl, and
wherein the argyrodite-type solid electrolyte has a density of 1.5 g/cc to 2.0 g/cc.

13. The all solid secondary battery (1) as claimed in any of claims 1 to 12,
wherein at least one of the cathode current collector (11) or the anode current collector (21) comprises a base film and a metal layer on at least one side of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

14. The all solid secondary battery (1) as claimed in any of claims 1 to 13, wherein a first diffraction angle of a first peak appearing at a diffraction angle 2θ=33±0.5°, corresponding to crystal plane (122) of Mo₆S₈ on an X-ray diffraction spectrum (XRD) of the composite is smaller than a second diffraction angle of a second peak appearing at a diffraction angle of 2θ=33±0.5°, corresponding to crystal plane (122) of Mo₆S₈ on an XRD spectrum of Mo₆S₈ utilized in preparation of the composite.

15. A method of preparing the all solid secondary battery (1) as claimed in any of claims 1 to 14, the method comprising:
obtaining a composite, by milling a composition comprising M₂S and molybdenum sulfide (Mo₆S₈),
M being alkali metal,
the alkali metal being lithium (Li) or sodium (Na);
preparing the cathode layer (10) comprising the cathode current collector (11) and the cathode active material layer (12), by utilizing a composition in which the composite is added and mixed with the solid electrolyte and the carbonaceous material, wherein the cathode active material layer (12) comprises the composite cathode active material comprising the composite, the carbonaceous material, and the solid electrolyte;
preparing the anode layer (20); and
arranging a solid electrolyte layer (30) between the cathode layer (10) and the anode layer (20), to prepare the all solid secondary battery (1).
